# EUROPEAN PATENT APPLICATION

(11) **EP 4 753 028 A1**
(43) Date of publication of application: **03.06.2026**
(21) Application number: 25219407.1
(22) Date of filing: 28.11.2025
(51) Int. Cl.: H01M 10/658, H01G 11/70, H01M 50/531

(54) **END COVER ASSEMBLY, ENERGY STORAGE APPARATUS, AND ELECTRICITY-CONSUMPTION DEVICE**

(30) Priority: 29.11.2024 CN 202411737702
(71) Applicant: Hithium Tech HK Limited, Kowloon, Hong Kong (HK)
(72) Inventor: QUAN, Liang, Xiamen, Fujian, 361100 (CN)
(74) Representative: Viering, Jentschura & Partner mbB Patent- und Rechtsanwälte

(57) **Abstract**

An end cover assembly (100), an energy storage apparatus (1000), and an electricity-consumption device are provided. The end cover assembly (100) includes a lower plastic member (10, 20), a connector (40, 50), and a heat insulating member (80). The lower plastic member (10, 20) defines an assembling groove (15, 25). The assembling groove (15, 25) has a groove bottom face (151, 251). The connector (40, 50) includes a connecting portion (41, 51), a transition portion (42, 52), and a bending portion (43, 53) connected between the connecting portion (41, 51) and the transition portion (42, 52). The connecting portion (41, 51) and the transition portion (42, 52) define an angle therebetween. The connecting portion (41, 51) is accommodated in the assembling groove (15, 25). An inner curved surface (432, 532) of the bending portion (43, 53) is connected between an inner surface (412, 512) of the connecting portion (41, 51) and an inner side surface (422, 522) of the transition portion (42, 52). The heat insulating member (80) is stacked on the connector (40, 50) and completely covers the inner surface (412, 512) and the inner side surface (422, 522). The heat insulating member (80) includes a thickened region completely covering the inner curved surface (432, 532).

## Description

### TECHNICAL FIELD

This disclosure relates to the field of energy storage technology, and in particular, to an end cover assembly, an energy storage apparatus, and an electricity-consumption device.

### BACKGROUND

With continuous advancement of energy storage technology, the requirements for internal structures of energy storage apparatuses are becoming higher and higher. In the existing energy storage apparatus, an electrode assembly generally adopts either a stacking type or a winding type. When the electrode assembly adopts the stacking type, tabs are led out from the electrode assembly and bent, and then welded with connectors. However, during the welding of the tabs and the connectors, high temperatures are likely to be generated and are transferred to the electrode assembly through the connectors, resulting in a series of defects in the electrode assembly and reducing a yield of the energy storage apparatus.

### SUMMARY

The present disclosure provides an end cover assembly, an energy storage apparatus, and an electricity-consumption device, which can prevent the high temperature generated during the welding of tabs and connectors from affecting an electrode assembly and improve a yield of the energy storage apparatus.

The present disclosure provides an end cover assembly. The end cover assembly includes a lower plastic member, a connector, and a heat insulating member. The lower plastic member includes a body. The body has a top face and a bottom face. The top face and bottom face are positioned facing away from each other in a thickness of the body. The lower plastic member further defines an assembling groove. The assembling groove has a groove bottom face. The groove bottom face and the bottom face have identical orientations. The connector includes a connecting portion, a transition portion, and a bending portion connected between the connecting portion and the transition portion. An extending direction of the connecting portion and an extending direction of the transition portion define an angle therebetween. The connecting portion is accommodated in the assembling groove. The transition portion extends in a direction away from the lower plastic member. The connecting portion has an outer surface and an inner surface. The inner surface and the outer surface are positioned facing away from each other in a thickness direction of the connecting portion. The outer surface is connected to the groove bottom face. The inner surface is positioned facing away from the groove bottom face. The transition portion has an inner side surface. The bending portion has an inner curved surface. The inner curved surface is connected between the inner surface and the inner side surface. The heat insulating member is stacked on the connector and completely covers the inner surface and the inner side surface. The heat insulating member includes a thickened region. The thickened region completely covers the inner curved surface.

In the related art, when the electrode-assembly body adopts the stacking type, tabs are led out from the electrode assembly and bent, and then welded with connectors. However, during the welding of the tabs and the connectors, high temperatures are likely to be generated and are transferred to the electrode assembly through the connectors, resulting in a series of defects in the electrode-assembly body, such as thermal shrinkage, melting-through, and damage of the separator between the positive electrode sheet and the negative electrode sheet, thereby reducing a yield of the energy storage apparatus.

In the present disclosure, the heat insulating member (i.e., high-temperature adhesive) is provided at the connector and a part of the lower plastic member connected to the connector. The heat insulating member covers the inner surface of the connecting portion of the connector, the inner side surface of the transition portion, and the inner curved surface of the bending portion, so as to block the heat conduction from the connector towards the electrode-assembly body by means of physical isolation, thereby reducing the high temperature generated when the tab and the connector are welded, and reducing the influence of the high temperature transferred to the connector on the electrode-assembly body. That is, defects such as thermal shrinkage, melting-through, damage of the separator between the positive electrode sheet and the negative electrode sheet are avoided, direct contact between the positive electrode sheet and the negative electrode sheet is avoided, and thus a short circuit of the electrode assembly is avoided. Meanwhile, consistency of the temperature of the first electrode sheet and the temperature of the negative electrode sheet is ensured, thereby facilitating improving the overall service life of energy storage apparatus and increasing the yield of the energy storage apparatus.

In addition, the heat insulating member is provided with the thickened region at the inner curved surface of the bending portion. The thickened region may be understood as a region in which the thickness of the heat insulating member is increased, or may be a region in which multiple heat insulating members are overlapped. The increased thickness of the thickened region of the heat insulating member covering the bending portion can better block the heat conduction from the connector to the electrode-assembly body, and is more conducive to blocking the heat of the connector when an overcurrent occurs in the connector. Meanwhile, when the area of the thickened region is larger, the mutual pulling force between two adjacent heat insulating parts is greater, and the adhesiveness of the heat insulating parts to the connectors is greater, which is conducive to improving the yield of the energy storage apparatus.

In an embodiment, the thickened region further covers a part of the inner side surface connected to one of two sides of the inner curved surface, a part of the inner surface connected to the other of the two sides of the inner curved surface, or the part of the inner side surface connected to one of two sides of the inner curved surface and the part of the inner surface connected to the other of the two sides of the inner curved surface.

It can be understood that in addition to providing the thickened region at the inner curved surface of the bending portion, the heat insulating member may also provide the thickened region at the part of the inner surface of the connecting portion connected to the inner curved surface of the bending portion and the part of the inner side surface of the transition portion, so as to increase the contact area between the connector and the heat insulating member, thereby effectively blocking the heat conduction between the connector and the electrode-assembly body.

In an embodiment, a ratio of an area of the thickened region to an area of the inner curved surface is greater than or equal to 1.2 and less than or equal to 5.

It can be understood that the area of the thickened region is larger than the area of the inner curved surface, thereby further effectively blocking the heat conduction between the connector and the electrode-assembly body.

In an embodiment, the heat insulating member includes an end heat-insulating-member and a side heat-insulating-member. The end heat-insulating-member covers the inner side surface and the inner curved surface. The side heat-insulating-member covers the inner curved surface and the inner surface. The end heat-insulating-member and the side heat-insulating-member partially overlap. An overlapping part of the end heat-insulating-member and the side heat-insulating-member is the thickened region.

It can be understood that the side heat-insulating-member covers the inner curved surface and the inner side surface. The end heat-insulating-member covers the inner surface and the inner curved surface. The overlapping part of the side heat-insulating-member and the end heat-insulating-member covers the inner curved surface, that is, the side heat-insulating-member and the end heat-insulating-member are stacked to form the thickened region. The mutual pulling force between the side heat-insulating-member and the end heat-insulating-member is increased, and the adhesiveness of the heat insulating member to the connector is enhanced, which is more conducive to blocking the heat conduction from the transition portion to the electrode-assembly body, thereby improving the yield of the energy storage apparatus.

In an embodiment, the body is provided with a boss protruding from the bottom face. The boss has a boss face positioned facing away from the bottom face. The assembling groove is recessed from the boss face and is positioned at an end of the lower plastic member in a length direction of the lower plastic member. The end heat-insulating-member completely covers the boss face, or the end heat-insulating-member completely covers the boss face and a part of the bottom face of the lower plastic member positioned at one side of the boss positioned facing away from the assembling groove.

It can be understood that the end heat-insulating-member completely covers the boss face and the part of the bottom face of the lower plastic member at the side of the boss positioned facing away from the assembling groove in the width direction of the boss. When the contact area between the end heat-insulating-member and the lower plastic member is larger, it is more beneficial to separate the lower plastic from the electrode-assembly body, so as to block the heat conduction from the connector and the lower plastic member near the connector to the electrode-assembly body to the greatest extent, thereby avoiding the influence of high temperature on the electrode assembly.

In an embodiment, the body is provided with a boss protruding from the bottom face. The boss has a boss face positioned facing away from the bottom face. The assembling groove is recessed from the boss face and is positioned at an end of the lower plastic member in a length direction of the lower plastic member. In a width direction of the lower plastic member, a width of the end heat-insulating-member is larger than a width of the connector, a width of a part of the end heat-insulating-member exceeding the connector is an excess width, and a ratio of a width of the thickened region to the excess width is greater than or equal to 1.1 and less than or equal to 3.

It can be understood that the width of the end heat-insulating-member is larger than the width of the connecting portion of the connector, so as to completely separate the lower plastic member from the electrode-assembly body, thereby blocking the heat conduction between the electrode-assembly body and both the connector and the part of the lower plastic member near the connector, and avoiding the influence of high temperature on the electrode assembly. In some embodiments, the width of the end heat-insulating-member may also be larger than the width of the boss. The end heat-insulating-member not only covers the inner surface and the boss face, but also covers the part of the bottom face of the lower plastic member at the side of the boss positioned facing away from the assembling groove, so that the contact area between the end heat-insulating-member and the lower plastic member is further increased, which is more conducive to separating the lower plastic member from the electrode-assembly body, thereby blocking the heat conduction from the connector and the part of the lower plastic member near the connector to the electrode-assembly body to the greatest extent, and further avoiding the influence of high temperature on the electrode assembly.

In addition, since the heat conduction capacity from the connector to the lower plastic member is relatively poor and the heat conduction capacity from the connector to the electrode-assembly body is good, the width of the thickened region formed by the overlapping of the end heat-insulating-member and the side heat-insulating-member needs to be larger than the excess width, and the ratio of the width of the thickened region to the excess width is greater than or equal to 1.1 and less than or equal to 3. Therefore, not only can the heat conduction between the bending portion and the electrode-assembly body be sufficiently avoided, but also excessive material consumption of the heat insulating member can be avoided, thereby preventing waste.

In an implementation, the side heat-insulating-member further covers a part of the inner surface. The end heat-insulating-member further covers a part of the inner side surface. The overlapping part of the end heat-insulating-member and the side heat-insulating-member further covers the part of the inner side surface and the part of the inner surface.

It can be understood that the side heat-insulating-member covers the part of the inner surface, the inner curved surface, and the inner side surface. The end heat-insulating-member covers the inner surface, the inner curved surface, and the part of the inner side surface. The overlapping part of the side heat-insulating-member and the end heat-insulating-member covers the part of the inner surface, the inner curved surface, and the part of the inner side surface, that is, the area of the thickened region is further increased. The mutual pulling force between the side heat-insulating-member and the end heat-insulating-member is increased, and the adhesiveness of the heat insulating member to the connector is enhanced, which is more conducive to blocking the heat conduction from the transition portion to the electrode-assembly body, thereby improving the yield of the energy storage apparatus.

In an embodiment, the end heat-insulating-member and the side heat-insulating-member are integrally formed, or the end heat-insulating-member and the side heat-insulating-member are separately formed.

It can be understood that the heat insulating member includes the end heat-insulating-member and the side heat-insulating-member. The end heat-insulating-member and the side heat-insulating-member can be separately formed or integrally formed, so as to accommodate different requirements in actual production applications.

In an embodiment, the body is further provided with a protrusion protruding from the bottom face. The protrusion is adjacent to the boss in the length direction of the lower plastic member. The protrusion exceeds the boss relative to the bottom face. The protrusion has a protrusion inner side surface. The protrusion inner side surface is positioned facing towards the boss and is connected to the boss face. The end heat-insulating-member abuts against the protrusion inner side surface at an edge of the end heat-insulating-member.

It can be understood that when the protrusion exceeds the boss relative to the bottom face and the protrusion inner side surface is connected to the boss face, the end heat-insulating-member not only covers the inner surface of the connecting portion and the inner curved surface of the bending portion, but also covers and is connected to the boss face around the connecting portion, and the edge of the end heat-insulating-member away from the side heat-insulating-member is adhered to the protrusion inner side surface. Therefore, the contact area between the end heat-insulating-member and the lower plastic member is increased, the instability of the end heat-insulating-member when the end heat-insulating-member is impacted by the electrolyte is reduced, and the attachment effect of the end heat-insulating-member on the lower plastic member. In addition, the protrusion inner side surface also plays a role in limiting the adhesion of the end heat-insulating-member, thereby improving the adhesion rate of the end heat-insulating member.

In an embodiment, the body is further provided with a protrusion protruding from the bottom face. The protrusion is adjacent to the boss in the length direction of the lower plastic member. The protrusion has a protrusion face. The protrusion face is positioned facing away from the bottom face. The end heat-insulating-member covers the boss face and the protrusion face or the end heat-insulating-member covers a protrusion outer side surface of the protrusion positioned facing away from the boss; and/or the end heat-insulating-member covers a part of the bottom face of the lower plastic member positioned at one side of the protrusion positioned facing away from the boss.

It can be understood that the end heat-insulating-member not only covers the inner surface of the connecting portion and the inner curved surface of the bending portion, but also covers and is connected to the protrusion face and the boss face of the boss, so that the contact area between the end heat-insulating-member and the lower plastic member is further increased, thereby improving the attachment effect of the end heat-insulating-member on the lower plastic member.

In an embodiment, the connector includes a first connector and a second connector. The first connector and the second connector are respectively positioned at opposite ends of the lower plastic member in a length direction of the lower plastic member. The first connector is a positive connector. The second connector is a negative connector. The end heat-insulating-member includes a first end-heat-insulating-member and a second end-heat-insulating-member. The side heat-insulating-member includes a first side-heat-insulating-member and a second side-heat-insulating-member. The first end-heat-insulating-member and the first side-heat-insulating-member cover the first connector. The second end-heat-insulating-member and the second side-heat-insulating-member cover the second connector.

It can be understood that the first connector and the second connector are respectively connected to opposite ends of the electrode-assembly body in the length direction of the electrode-assembly body, and are respectively conducted to the first tab and the second tab. Since the materials of the positive connector and the negative connector are different, on condition that the positive connector and the negative connector are required to satisfy overcurrent, the sizes of the heat insulating member covering the first connector and the second connector are different. The first connector being the positive connector and the second connector being the negative connector are taken as an example for explanation.

In an implementation, the end cover assembly further includes a terminal post and an end cover. The end cover and the lower plastic member are stacked in a thickness direction of the end cover assembly. The end cover defines a terminal-post through-hole. The terminal-post through-hole extends through both surfaces of the end cover in a thickness direction of the end cover. The connecting portion defines a via hole. The via hole extends through the inner surface and the outer surface. The lower plastic member further defines a through hole. The through hole extends through the groove bottom face and the top face. The terminal-post through-hole, the through hole, and the via hole are coaxially defined. The terminal post passes through the terminal-post through-hole, the through hole, and the via hole, and is electrically connected to the connecting portion. The heat insulating member covers the terminal post.

It can be understood that the terminal post passes through the end cover, the lower plastic member, and the connector, and is welded to and electrically connected to the connector, and the connector is welded to and electrically connected to the tab, thereby realizing the electrical conduction between the terminal post and the tab. The end heat-insulating-member covers the terminal post passing through the via hole, so as to block metal debris generated when the connecting portion of the connector and the terminal post are welded from falling into the electrode assembly, thereby preventing the electrode assembly from a short circuit caused by contact between the metal debris and the electrode assembly. Meanwhile, the smooth surface of the heat insulating member can refract the laser energy generated during laser welding between the connecting portion and the terminal post, thereby avoiding the influence of the laser energy on the performance of the heat insulating member.

The present disclosure provides an energy storage apparatus. The energy storage apparatus includes a housing, an electrode assembly, and the end cover assembly. The housing defines an opening. The electrode assembly is mounted in the housing. The electrode assembly includes an electrode-assembly body and a tab. The electrode-assembly body has a side surface and a top surface connected to the side surface. The tab is led out from the side surface and is electrically connected to the electrode-assembly body. The end cover assembly seals the opening. The bottom face is positioned facing towards the top surface. The transition portion is stacked with and electrically connected to the tab. The heat insulating member is positioned facing towards the electrode-assembly body at one side of the heat insulating member positioned facing away from the connector.

It can be understood that both the end cover assembly and the electrode assembly are mounted in the housing, and an edge of the end cover and an opening edge of the housing are connected by welding or the like to seal the energy storage apparatus. The heat insulating member is positioned between the connector and the electrode assembly, so that the influence of a large amount of heat, generated when the connector is welded with both the tab and the terminal post, on the electrode-assembly body is reduced. In addition, the short circuit caused by contact between the connector and the electrode-assembly body is avoided, and the short circuit caused by metal debris, generated when the connector is welded with both the terminal post and the tab, falling into the connector and the electrode-assembly body is avoided, thereby improving the yield of the energy storage apparatus. The heat insulation blocks the heat transfer from the connector and lower plastic member to the electrode-assembly body, so that the probability of abnormalities of the electrode assembly (such as increased internal resistance, self-discharge, or ignition) is reduced to a certain extent, and the consistency of the temperature of the first connector and the temperature of the second connector is ensured. Therefore, the risk of metallic lithium precipitation from the negative electrode is reduced, and the safety of the energy storage apparatus is ensured, thereby facilitating improving the overall service life of the energy storage apparatus.

The present disclosure provides an electricity-consumption device. The electricity-consumption device includes the energy storage apparatus. The energy storage apparatus is configured to power the electricity-consumption device.

### BRIEF DESCRIPTION OF THE DRAWINGS

FIG. 1 is a schematic view of an application scenario of an energy storage apparatus provided in embodiments of the present disclosure.
FIG. 2 is a schematic structural view of an energy storage apparatus provided in embodiments of the present disclosure.
FIG. 3 is an exploded schematic structural view of the energy storage apparatus illustrated in FIG. 2.
FIG. 4 is a schematic structural view of a first lower plastic member illustrated in FIG. 3 from another perspective.
FIG. 5 is a schematic structural view of a second lower plastic member illustrated in FIG. 3 from another perspective.
FIG. 6 is a schematic structural view of a first connector of an end cover assembly in the energy storage apparatus illustrated in FIG. 3.
FIG. 7 is a schematic structural view of a second connector of an end cover assembly in the energy storage apparatus illustrated in FIG. 3.
FIG. 8 is a partial exploded schematic structural view of the end cover assembly illustrated in FIG. 3.
FIG. 9 is a partial schematic structural view of the end cover assembly illustrated in FIG. 8.
FIG. 10 is a schematic cross-sectional structural view of the energy storage apparatus illustrated in FIG. 2.

Description of reference signs of the accompanying drawings: energy storage apparatus 1000, housing 200, opening 201, accommodating cavity 202, end cover assembly 100, first lower plastic member 10, first body 11, first top-face 111, first bottom-face 112, first boss 13, first boss-face 131, first assembling groove 15, first groove-bottom-face 151, first groove-circumferential-face 152, first protrusion 16, first protrusion-face 161, first protrusion-inner-side-surface 162, first protrusion-outer-side-surface 163, first through-hole 17, first positioning post 18, second lower plastic member 20, second body 21, second top-face 211, second bottom-face 212, second boss 23, second boss-face 231, second assembling groove 25, second groove-bottom-face 251, second groove-circumferential-face 252, second protrusion 26, second protrusion-face 261, second protrusion-inner-side-surface 262, second protrusion-outer-side-surface 263, second through-hole 27, second positioning post 28, end cover 30, upper surface 31, lower surface 32, first terminal-post through-hole 33, second terminal-post through-hole 34, first connector 40, first connecting portion 41, first outer surface 411, first inner surface 412, first via hole 413, first limiting hole 414, first transition portion 42, first outer-side-surface 421, first inner-side-surface 422, first end-face 423, first bending portion 43, first outer-curved-surface 431, first inner-curved-surface 432, second connector 50, second connecting portion 51, second outer surface 511, second inner surface 512, second via hole 513, second limiting hole 514, second transition portion 52, second outer-side-surface 521, second inner-side-surface 522, second end-face 523, second bending portion 53, second outer-curved-surface 531, second inner-curved-surface 532, first terminal-post 60, second terminal-post 70, heat insulating member 80, first side-heat-insulating-member 81, first end-heat-insulating-member 82, first tail-heat-insulating-member 83, second side-heat-insulating-member 84, second end-heat-insulating-member 85, second tail-heat-insulating-member 86, electrode assembly 300, electrode-assembly body 310, first side-surface 311, second side-surface 312, top surface 313, first tab 320, second tab 330, first excess width D1, second excess width D2, first electricity-consumption device 3000, second electricity-consumption device 2000, first electric-energy conversion apparatus 4100, second electric-energy conversion apparatus 4200, energy storage system 5000.

### DETAILED DESCRIPTION

The following will describe technical solutions of embodiments of the present disclosure clearly and completely with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

In the present disclosure, unless otherwise definitely specified and limited, terms "mount", "mutually connect", "connect", "fix" and the like should be broadly understood. For example, the terms may refer to fixed connection and may also refer to detachable connection or integration. The terms may refer to mechanical connection and may also refer to electrical connection or mutual communication. The terms may refer to direct mutual connection, may also refer to indirect connection through a medium and may refer to communication in two components or an interaction relationship of the two components, unless otherwise definitely limited.

In addition, terms "first", "second", and the like are only used for description and cannot be understood as explicitly or implicitly indicating relative importance or implicitly indicating the number of technical features referred to herein. Therefore, features restricted by terms "first", "second", and the like can explicitly or implicitly include at least one of the features.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, in order to achieve the purpose of carbon neutralization, the main way to generate green electric energy at present is to develop green energy such as photovoltaic and wind power to replace fossil energy. At present, generation of green electric energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "curtailment of wind and photovoltaics" may occur due to insufficient power demand or insufficient power-grid admitting ability, and energy storage is required to solve these problems. That is, electric energy is stored by converting it into other forms of energy by physical or chemical means, and energy is released by converting it into electric energy when needed. In brief, energy storage is similar to a large "power bank", which stores electric energy when photovoltaics and wind energy are sufficient and releases stored electric power when needed.

Taking electrochemical energy storage as an example, an energy storage apparatus 1000 is provided in the present disclosure. The energy storage apparatus 1000 includes one group of chemical batteries. Chemical elements in the chemical batteries can be used as an energy storage medium to implement a charging/discharging process through chemical reaction or change of the energy storage medium. In brief, electric energy generated by solar energy and wind energy is stored in the chemical batteries. When the usage of external electric energy reaches a peak, the power stored in the chemical batteries is released for use, or is transferred to a place where the power is scarce for reuse.

At present, energy storage may be applied in various application scenarios, including (wind/solar) power-generation-side energy storage, grid-side energy storage, base-station-side energy storage, user-side energy storage, etc. Corresponding types of energy storage apparatuses include the following.
(1) A large-sized energy storage container applied in a grid-side energy-storage scenario. The energy storage container may serve as a high-quality active and reactive regulation power source in the grid, which can realize matching of electric energy loads in time and space, enhance the capacity for integration of renewable energy, and is of great significance in the backup of the grid system, relieving the pressure of power supply at a peak load, and peak shaving and frequency modulation.
(2) A small and medium-sized energy storage cabinet applied in a user-side industrial and commercial energy-storage scenario (banks, shopping malls, etc.). The small and medium-sized energy storage cabinet mainly operates in a "peak shaving and valley filling" mode. Based on the demand for electricity, there may be a significant price difference in electricity prices at peak and valley periods. When the user has an energy storage device, in order to reduce cost, an energy storage cabinet/box may be usually charged during an electricity-price valley period, and the electricity in the energy storage device may be usually released for use during the electricity-price peak period to save electricity cost.

It may be noted that the above-described devices, such as the energy storage container, the small and medium-sized energy storage cabinet, and the small household energy storage container, including the energy storage apparatus 1000, can be understood as electricity-consumption devices.

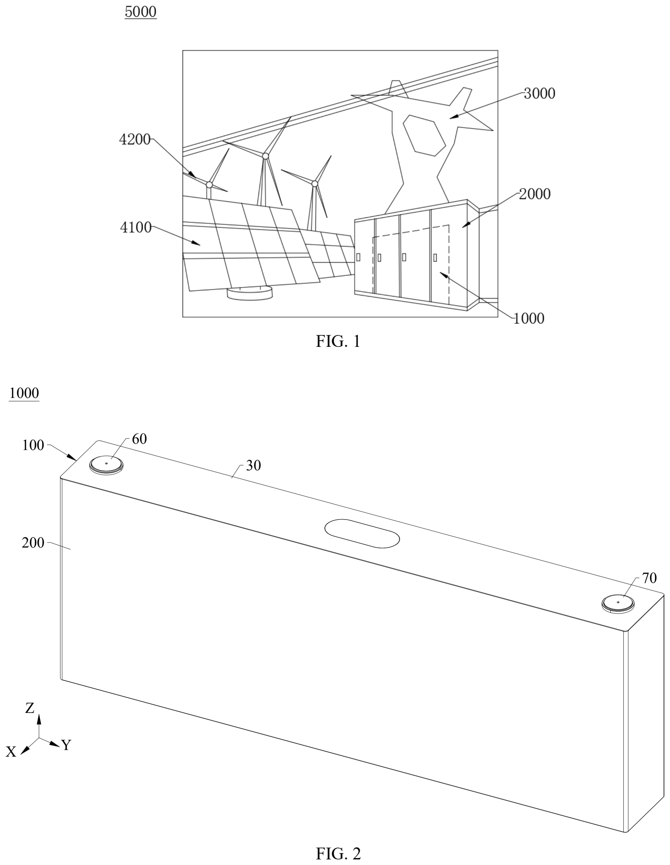

Reference can be made to FIG. 1, which is an application scenario view of an energy storage apparatus provided in embodiments of the present disclosure.

An energy storage apparatus 1000 provided in an embodiment of the present disclosure is applied to an energy storage system 5000. The energy storage system 5000 includes a first electric-energy conversion apparatus (photovoltaic panel) 4100, a second electric-energy conversion apparatus (wind turbine) 4200, a first electricity-consumption device (power grid) 3000, a second electricity-consumption device (base station) 2000, and an energy storage apparatus 1000. The energy storage system 5000 further includes an energy storage cabinet. The energy storage apparatus 1000 is mounted in the energy storage cabinet. The energy storage cabinet may be mounted outdoors. Specifically, the first electric-energy conversion apparatus 4100 can convert solar energy into electric energy during the electricity-price valley period. The energy storage apparatus 1000 is configured to store the electric energy and provide the electric energy to the first electricity-consumption device 3000 or the second electricity-consumption device 2000 during a power-consumption peak period, or supply electricity when there is an outage/blackout in the first electricity-consumption device 3000 or the second electricity-consumption device 2000. The second electric-energy conversion apparatus 4200 can convert wind energy into electric energy. The energy storage apparatus 1000 is configured to store the electric energy and provide the electric energy to the first electricity-consumption device 3000 or the second electricity-consumption device 2000 during the power-consumption peak period, or supply electricity when there is an outage/blackout in the first electricity-consumption device 3000 or the second electricity-consumption device 2000. The electric energy may be transmitted using a high voltage cable.

It may be noted that the above first electricity-consumption device 3000, the second electricity-consumption device 2000, and other devices including the energy storage apparatus 1000 can be understood as electricity-consumption devices. The energy storage apparatus 1000 can supply power to the electricity-consumption device.

The number of energy storage apparatuses 1000 may be multiple, and the multiple energy storage apparatuses 1000 are connected in series or in parallel with each other. In this embodiment, "multiple" means two or more.

It can be understood that the energy storage apparatus 1000 may include, but is not limited to, a battery, a battery module, a battery pack, a battery system, and the like. An actual application form of the energy storage apparatus 1000 provided in embodiments of the present disclosure may be, but is not limited to, the listed products, and may also be other application forms. For example, the energy storage apparatus 1000 may be a secondary battery such as a nickel-metal hydride battery, a nickel-cadmium battery, a lead-acid (or lead-storage) battery, a lithium-ion battery, or a polymer lithium-ion battery. When the energy storage apparatus 1000 is a battery, the energy storage apparatus 1000 may be a cylindrical battery, a prismatic battery, or a battery in other shapes. In this embodiment, the energy storage apparatus 1000 is a prismatic battery. The prismatic battery is a secondary battery.

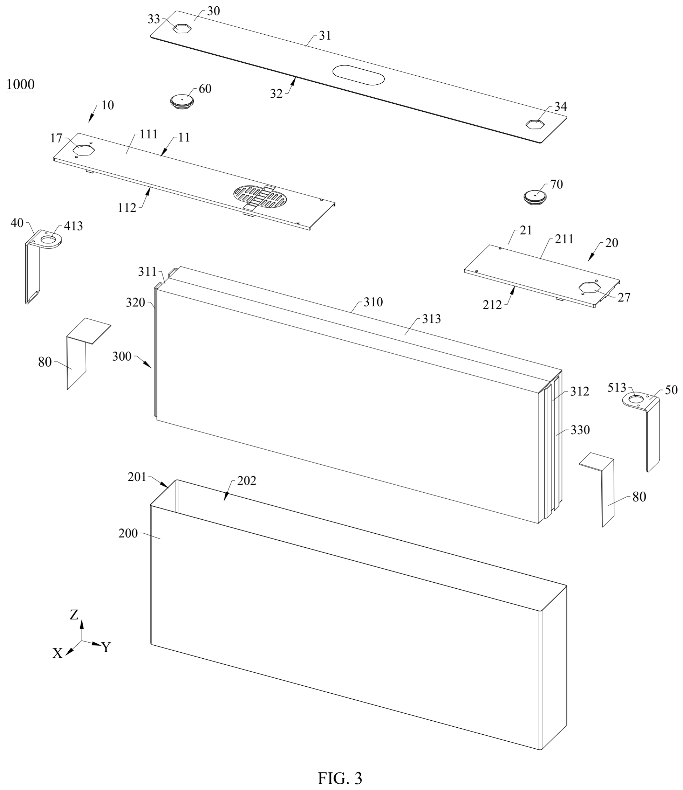

Reference can be made to FIG. 2 and FIG. 3, where FIG. 2 is a schematic structural view of an energy storage apparatus provided in embodiments of the present disclosure, and FIG. 3 is an exploded schematic structural view of the energy storage apparatus illustrated in FIG. 2.

For convenience of description, a width direction of the energy storage apparatus 1000 is defined as an X-axis direction, a length direction of the energy storage apparatus 1000 is defined as a Y-axis direction, and a height direction of the energy storage apparatus 1000 is defined as a Z-axis direction. The X-axis direction, the Y-axis direction, and the Z-axis direction are mutually perpendicular in pairs.

Orientational terms such as "upper", "top", "lower", "bottom", "left", "right", and the like mentioned in the description of embodiments of the present disclosure are described based on orientations illustrated in FIG. 2 of the specification, which do not form a limitation to the energy-storage apparatus 1000 in practical application scenarios. Specifically, the positive direction towards the Z-axis direction is considered as the top of the energy storage apparatus 1000, and the negative direction towards the Z-axis direction is considered as the bottom of the energy storage apparatus 1000. In addition, as used in the following description, "the same", "identical", "equal", or "parallel" all allow a certain tolerance to exist.

As illustrated in FIG. 2 and FIG. 3, the energy storage apparatus 1000 includes a housing 200, an end cover assembly 100, and an electrode assembly 300. The housing 200 defines an opening 201 and an accommodating cavity 202. The opening 201 is in communication with the accommodating cavity 202. The electrode assembly 300 is accommodated in the accommodating cavity 202. The end cover assembly 100 is mounted at one end of the electrode assembly in the height direction (in the Z-axis direction) of the electrode assembly 300, and is sealed at the opening 201, so as to insulate the internal environment of the energy storage apparatus 1000 from the external environment. When the housing 200 is a metal housing, the energy storage apparatus 1000 further includes an insulating film (not shown). The insulating film is positioned between the electrode assembly 300 and the housing 200, so as to insulate the electrode assembly 300 from the housing 200 and play a protective role for the electrode assembly 300.

In this embodiment, the electrode assembly 300 has a stacking-type structure for fully utilizing the space inside the housing 200, thereby increasing the volumetric energy density of the energy storage apparatus 1000. The electrode assembly 300 includes an electrode-assembly body 310 and a tab. The electrode-assembly body 310 is formed by stacking a positive electrode sheet, a negative electrode sheet, and a separator positioned between the positive electrode sheet and the negative electrode sheet together. The separator is configured to insulate the positive electrode sheet and the negative electrode sheet. Each of the positive electrode sheet and the negative electrode sheet includes a first part and a second part, where the first part is coated with an active material, and the second part extends outwardly from the first part and is not coated with the active material. The electrode-assembly body 310 has a first side-surface 311 and a second side-surface 312. In the length direction (i.e., the Y-axis direction) of the electrode-assembly body 310, the first side-surface 311 and the second side-surface 312 are disposed opposite to each other. The electrode-assembly body 310 further has a top surface 313. The top surface 313 is connected between the first side-surface 311 and the second side-surface 312. The top surface 313 faces towards the opening 201. In this embodiment, the number of electrode-assembly bodies 310 is two. The two electrode-assembly bodies 310 are connected in parallel in the Y-axis direction.

The tab includes a first tab 320 and a second tab 330. Both the first tab 320 and the second tab 330 are electrically connected to the electrode-assembly body 310. The first tab 320 and the second tab 330 are symmetric about a central axis of the electrode-assembly body 300 in the width direction of the electrode-assembly body 310, so as to ensure the symmetry of the overcurrent position of the tab, and thus ensure the stability of the current transmission of the electrode assembly 300. In the Y-axis direction, the first tab 320 is led out from the first side-surface 311 of the electrode-assembly body 310. The second tab 330 is led out from the second side-surface 312 of the electrode-assembly body 310. In this embodiment, the first tab 320 may be a positive tab, and the second tab 330 may be a negative tab. The positive tab corresponds to the second part of the positive electrode sheet that is not coated with the active material. The negative tab corresponds to the second part of the negative electrode sheet that is not coated with the active material. The number of each of the first tab 320 and the second tab 330 is two. In other embodiments, the first tab 320 may be a negative tab, and the second tab 330 may be a positive tab.

The end cover assembly 100 includes a lower plastic member, an end cover 30, a first connector 40, a second connector 50, a first terminal-post 60, a second terminal-post 70, and a heat insulating member 80. The lower plastic member and the end cover 30 are stacked in the height direction (i.e., the Z-axis direction) of the energy storage apparatus 1000. The length of the lower plastic member is equal to or substantially equal to the length of the end cover 30. The width of the lower plastic member is equal to or substantially equal to the width of the end cover 30. The first terminal-post 60 and the second terminal-post 70 are respectively positioned at opposite ends of the end cover assembly 100 in the length direction of the end cover assembly 100. The first terminal-post 60 passes through the end cover 30 and the lower plastic member, and is connected to the first connector 40. The second terminal-post 70 passes through the end cover 30 and the lower plastic member, and is connected to the second connector 50. As illustrated in FIG. 3, the first connector 40 and the second connector 50 are respectively positioned at opposite ends of the electrode assembly 300 in the length direction (i.e., the Y-axis direction) of the electrode assembly 300. A part of the first connector 40 is mounted at one side of the lower plastic member positioned facing away from the end cover 30. Another part of the first connector 40 is stacked with and connected to the first tab 320. The first tab 320 is electrically connected to the first terminal-post 60 through the first connector 40. A part of the second connector 50 is mounted at one side of the lower plastic member positioned facing away from the end cover 30. Another part of the second connector 50 is stacked with and connected to the second tab 330. The second tab 330 is electrically connected to the second terminal-post 70 through the second connector 50. The heat insulating member 80 is stacked on both the first connector 40 and the second connector 50. In this embodiment, the end cover 30 is made of a smooth aluminum member, and the lower plastic member is made of plastic and is insulated. A part of the heat insulating member 80 is provided between the first connector 40 and the electrode-assembly body 310, and covers a surface of the first connector 40 facing towards the electrode-assembly body 310 and covers a part of a surface of the lower plastic member. Another part of the heat insulating member 80 is provided between the second connector 50 and the electrode-assembly body 310, and covers a surface of the second connector 50 facing towards the electrode-assembly body 310 and covers a part of a surface of the lower plastic member. The first terminal-post 60 is a positive terminal post, and the second terminal-post 70 is a negative terminal post. In other embodiments, the first terminal-post 60 is a negative terminal post, and the second terminal-post 70 is a positive terminal post.

In this embodiment, the end cover 30 is an elongated thin plate. The end cover 30 has an upper surface 31 and a lower surface 32. The upper surface 31 and the lower surface 32 are positioned facing away from each other in the thickness direction (i.e., the Z-axis direction) of the end cover 30.

The end cover 30 defines a first terminal-post through-hole 33 and a second terminal-post through-hole 34. The first terminal-post through-hole 33 extends through the upper surface 31 and the lower surface 32 in the thickness direction of the end cover 30. The first terminal-post through-hole 33 is used for the first terminal-post 60 to pass through. The second terminal-post through-hole 34 extends through the upper surface 31 and the lower surface 32. The second terminal-post through-hole 34 is used for the second terminal-post 70 to pass through. In the length direction (i.e., the Y-axis direction) of the end cover 30, the first terminal-post through-hole 33 and the second terminal-post through-hole 34 are respectively positioned at opposite ends of the end cover 30. In this embodiment, the first terminal-post through-hole 33 and the second terminal-post through-hole 34 are both circular holes. In some embodiments, the shapes of the first terminal-post through-hole 33 and the second terminal-post through-hole 34 may be elliptical, rectangular, or the like, which is not strictly limited in the present disclosure.

In some embodiments, the upper surface 31 of the end cover 30 is provided with an insulator (not shown). The insulator completely covers the upper surface 31 of the end cover 30. The insulating member is configured to protect the end cover 30, so as to prevent the end cover 30 from being scratched and prevent affecting the use of the end cover 30.

The lower plastic member includes a first lower plastic member 10 and a second lower plastic member 20. In this embodiment, the first lower plastic member 10 and the second lower plastic member 20 have split structures. In other embodiments, the first lower plastic member 10 and the second lower plastic member 20 may have an integral structure.

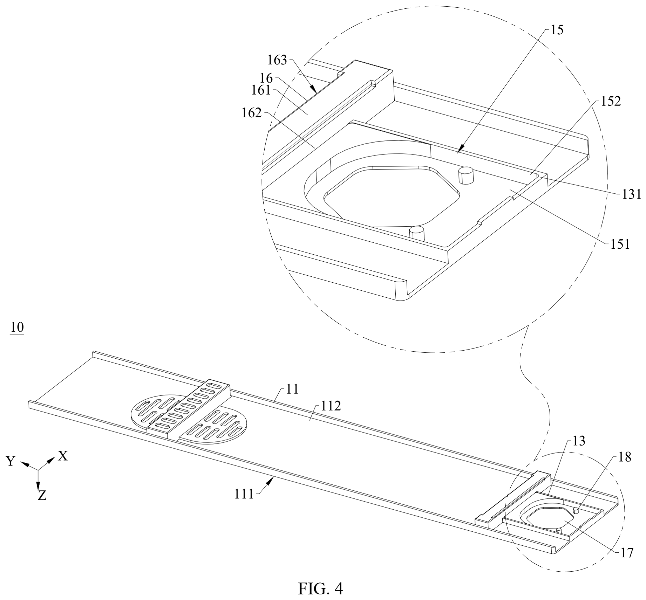

Reference can be made to FIG. 3 and FIG. 4 together, where FIG. 4 is a schematic structural view of the first lower plastic member illustrated in FIG. 3 from another perspective.

In this embodiment, the first lower plastic member 10 is an elongated thin plate. The first lower plastic member 10 includes a first body 11. The first body 11 has a first top-face 111 and a first bottom-face 112. The first top-face 111 and the first bottom-face 112 are positioned facing away from each other in the thickness direction (i.e., the Z-axis direction) of the first body 11.

The first lower plastic member 10 further includes a first boss 13. The first boss 13 protrudes from the first bottom-face 112 of the first body 11. The first boss 13 has a first boss-face 131. The first boss-face 131 is positioned facing away from the first body 11 and has the same orientation as the first bottom-face 112. In this embodiment, the first boss 13 is a substantially rectangular protrusion.

The first lower plastic member 10 further defines a first assembling groove 15. The first assembling groove 15 is recessed from the first boss-face 131 of the first boss 13, and is recessed towards the first body 11. The first assembling groove 15 is used for accommodating a part of the first connector 40. The first assembling groove 15 has a first groove-bottom-face 151 and a first groove-circumferential-face 152. The first groove-bottom-face 151 has the same orientation as the first bottom-face 112. The first groove-circumferential-face 152 surrounds a peripheral edge of the first groove-bottom-face 151 and is connected to the first groove-bottom-face 151.

The first lower plastic member 10 further includes a first protrusion 16. The first protrusion 16 protrudes from the first bottom-face 112. In the Y-axis direction, the first boss 13 is adjacent to the first protrusion 16. It can be understood that the first protrusion 16 is spaced apart from the first assembling groove 15 in the Y-axis direction. In this embodiment, the first protrusion 16 extends in the X-axis direction. The first protrusion 16 has a first protrusion-face 161. In the Z-axis direction, the first protrusion-face 161 is positioned facing away from the first bottom-face 112. In this embodiment, the first protrusion 16 is a substantially rectangular protrusion. The length (i.e., the dimension in the X-axis direction) of the first protrusion 16 is equal to the width (i.e., the dimension in the X-axis direction) of the first boss 13.

In this embodiment, a distance from the first protrusion-face 161 to the first bottom-face 112 is larger than a distance from the first boss-face 131 to the first bottom-face 112. That is, a height of the first protrusion 16 protruding from the first bottom-face 112 of the first body 11 is larger than a height of the first boss 13 protruding from the first bottom-face 112. The first protrusion-face 161 and the first boss-face 131 of the first boss 13 are not on the same horizontal plane. The first protrusion 16 further has a first protrusion-inner-side-surface 162 and a first protrusion-outer-side-surface 163. The first protrusion-inner-side-surface 162 and the first protrusion-outer-side-surface 163 are positioned facing away from each other in the width direction (i.e., the Y-axis direction) of the first protrusion 16. The first protrusion-face 161 is connected between the first protrusion-inner-side-surface 162 and the first protrusion-outer-side-surface 163. The first protrusion-inner-side-surface 162 is positioned facing towards the first boss 13 and is connected to the first boss-face 131. The first protrusion-outer-side-surface 163 is positioned facing away from the first boss 13 and is connected to the first bottom-face 112. In fact, the length and width dimensions of the first protrusion 16 can be determined according to the length and width dimensions of both the first boss 13 and the first lower plastic member 10. It can be understood that the first protrusion-face 161 of the first convex 16 can be regarded as the first bottom-face 112.

In other embodiments, the distance from the first protrusion-face 161 to the first bottom-face 112 is equal to the distance from the first boss-face 131 to the first bottom-face 112. That is, the height of the first protrusion 16 protruding from the first bottom-face 112 is equal to the height of the first boss 13 protruding from the first bottom-face 112. The first protrusion-face 161 is flush (i.e., on the same horizontal plane) with the first boss-face 131 of the first boss 13.

The first lower plastic member 10 further defines a first through-hole 17. The first through-hole 17 extends through the first groove-bottom-face 151 of the first assembling groove 15 and the first top-face 111 of the first body 11. The first through-hole 17 is used for the first terminal-post 60 to pass through. In this embodiment, the first through-hole 17 is a hexagonal hole. In some embodiments, the first through-hole 17 may be a circular hole, an elliptical hole, or the like, which is not strictly limited in the present disclosure.

The first lower plastic member 10 further includes multiple first positioning posts 18. The multiple first positioning posts 18 all protrude from the first groove-bottom-face 151 of the first assembling groove 15. Each first positioning post 18 is spaced apart from a peripheral edge of the first through-hole 17, and the multiple first positioning posts 18 are arranged at intervals from each other. The first positioning post 18 is configured for assembling and positioning the first connector 40. In this embodiment, the first positioning post 18 has a columnar shape. The number of the first positioning posts 18 is two.

In other embodiments, the first lower plastic member 10 further defines a first mounting groove (not shown). The first mounting groove is recessed from the first boss-face 131 of the first boss 13, and is recessed towards the first body 11. The first mounting groove is used for accommodating at least a part of the heat insulating member 80, so as to reduce the space occupied by the heat insulating member 80 in the thickness direction of the end cover assembly 100. The first mounting groove has a first groove-sidewall and a first groove-bottom-wall. The first groove-bottom-wall has the same orientation as the first bottom-face 112. The first groove-sidewall surrounds a peripheral edge of the first groove-bottom-wall and is connected to the first groove-bottom-wall. The first assembling groove 15 is recessed from the first groove-bottom-wall and is recessed towards the first top-face 111. It can be understood that an opening orientation of the first assembling groove 15 is consistent with an opening orientation of the first mounting groove. In the Z-axis direction, an orthographic projection of the first assembling groove 15 on the first lower plastic member 10 falls within the range of an orthographic projection of the first mounting groove on the first lower plastic member 10. The first protrusion 16 is adjacent to and connected to the first mounting groove. The first protrusion-inner-side-surface 162 of the first protrusion 16 constitutes a wall surface of the first groove-sidewall of the first mounting groove positioned facing towards the first groove-bottom-wall.

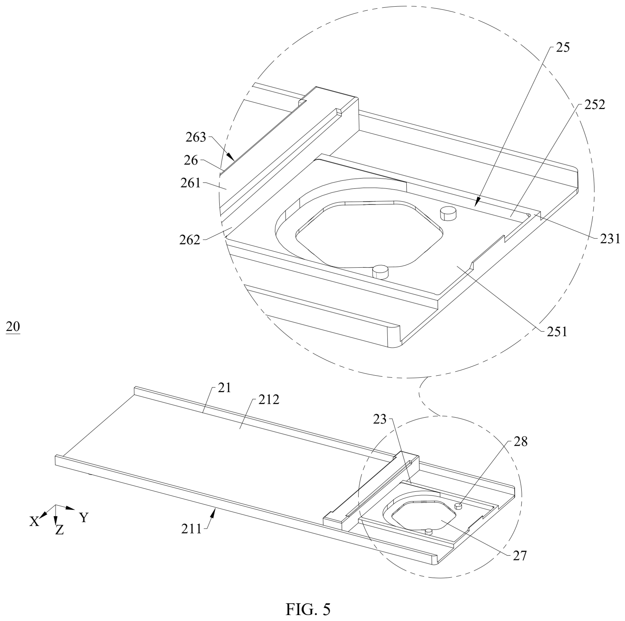

Reference can be made to FIG. 3 and FIG. 5 together, where FIG. 5 is a schematic structural view of a second lower plastic member illustrated in FIG. 3 from another perspective.

In this embodiment, the structure of the second lower plastic member 20 is similar to the structure of the first lower plastic member 10. The second lower plastic member 20 is an elongated thin plate. The second lower plastic member 20 includes a second body 21. The second body 21 has a second top-face 211 and a second bottom-face 212. The second top-face 211 and the second bottom-face 212 are positioned facing away from each other in the thickness direction (i.e., the Z-axis direction) of the second body 21.

The second lower plastic member 20 further includes a second boss 23. The second boss 23 protrudes from the second bottom-face 212 of the second body 21. The second boss 23 has a second boss-face 231. The second boss-face 231 is positioned facing away from the second body 21 and has the same orientation as the second bottom-face 212. In this embodiment, the second boss 23 is a substantially rectangular protrusion.

The second lower plastic member 20 further defines a second assembling groove 25. The second assembling groove 25 is recessed from the second boss-face 231 of the second boss 23, and is recessed towards the second body 21. The second assembling groove 25 is used for accommodating a part of the second connector 50. The second assembling groove 25 has a second groove-bottom-face 251 and a second groove-circumferential-face 252. The second groove-bottom-face 251 has the same orientation as the second bottom-face 212. The second groove-circumferential-face 252 surrounds a peripheral edge of the second groove-bottom-face 251 and is connected to the second groove-bottom-face 251.

The second lower plastic member 20 further includes a second protrusion 26. The second protrusion 26 protrudes from the second bottom-face 212. In the Y-axis direction, the second boss 23 is adjacent to the second protrusion 26. It can be understood that the second protrusion 26 is spaced apart from the second assembling groove 25 in the Y-axis direction. In this embodiment, the second protrusion 26 extends in the X-axis direction. The second protrusion 26 has a second protrusion-face 261. In the Z-axis direction, the second protrusion-face 261 is positioned facing away from the second bottom-face 212. In this embodiment, the second protrusion 26 is a substantially rectangular protrusion. The length (i.e., the dimension in the X-axis direction) of the second protrusion 26 is larger than the width (i.e., the dimension in the X-axis direction) of the second boss 23.

In this embodiment, a distance from the second protrusion-face 261 to the second bottom-face 212 is larger than a distance from the second boss-face 231 to the second bottom-face 212. That is, a height of the second protrusion 26 protruding from the second bottom-face 212 of the second body 21 is larger than a height of the second boss 23 protruding from the second bottom-face 212. The second protrusion-face 261 and the second boss-face 231 of the second boss 23 are not on the same horizontal plane. The second protrusion 26 further has a second protrusion-inner-side-surface 262 and a second protrusion-outer-side-surface 263. The second protrusion-inner-side-surface 262 and the second protrusion-outer-side-surface 263 are positioned facing away from each other in the width direction (i.e., the Y-axis direction) of the second protrusion 26. The second protrusion-face 261 is connected between the second protrusion-inner-side-surface 262 and the second protrusion-outer-side-surface 263. The second protrusion-inner-side-surface 262 is positioned facing towards the second boss 23 and is connected to the second boss-face 231. The second protrusion-outer-side-surface 263 is positioned facing away from the second boss 23 and is connected to the second bottom-face 212. In fact, the length and width dimensions of the second protrusion 26 can be determined according to the length and width dimensions of the second boss 23 and the second lower plastic member 20. It can be understood that the second protrusion-face 261 of the second convex 26 can be regarded as the second bottom-face 212.

In some embodiments, the distance from the second protrusion-face 261 to the second bottom-face 212 is equal to the distance from the second boss-face 231 to the second bottom-face 212. That is, the height of the second protrusion 26 protruding from the second bottom-face 212 is equal to the height of the second boss 23 protruding from the second bottom-face 212. The second protrusion-face 261 is flush (i.e., on the same horizontal plane) with the second boss-face 231 of the second boss 23.

The second lower plastic member 20 further defines a second through-hole 27. The second through-hole 27 extends through the second groove-bottom-face 251 of the second assembling groove 25 and the second top-face 211 of the second body 21. The second through-hole 27 is used for the second terminal-post 70 to pass through. In this embodiment, the second through-hole 27 is a hexagonal hole. In some embodiments, the second through-hole 27 may be a circular shape, an elliptical shape, or the like, which is not strictly limited in the present disclosure.

The second lower plastic member 20 further includes multiple second positioning posts 28. The multiple second positioning posts 28 all protrude from the second groove-bottom-face 251 of the second assembling groove 25. Each second positioning post 28 is spaced apart from a peripheral edge of the second through-hole 27, and the multiple second positioning posts 28 are arranged at intervals from each other. The second positioning post 28 is configured for assembling and positioning the second connector 50. In this embodiment, the second positioning post 28 has a columnar shape. The number of the second positioning posts 28 is two.

In other embodiments, the second lower plastic member 20 further defines a second mounting groove (not shown). The second mounting groove is recessed from the second boss-face 231 of the second boss 23, and is recessed towards the second body 21. The second mounting groove is used for accommodating at least a part of the heat insulating member 80, so as to reduce the space occupied by the heat insulating member 80 in the thickness direction of the end cover assembly 100. The second mounting groove has a second groove-sidewall and a second groove-bottom-wall. The second groove-bottom-wall has the same orientation as the second bottom-face 212. The second groove-sidewall surrounds a peripheral edge of the second groove-bottom-wall and is connected to the second groove-bottom-wall. The second assembling groove 25 is recessed from the second groove-bottom-wall and is recessed towards the second top-face 211. It can be understood that an opening orientation of the second assembling groove 25 is consistent with an opening orientation of the second mounting groove. In the Z-axis direction, an orthographic projection of the second assembling groove 25 on the second lower plastic member 20 falls within the range of an orthographic projection of the second mounting groove on the second lower plastic member 20. The second protrusion 26 is adjacent to and connected to the second mounting groove. The second protrusion-inner-side-surface 262 of the second protrusion 26 constitutes a wall surface of the second groove-sidewall of the second mounting groove positioned facing towards the second groove-bottom-wall.

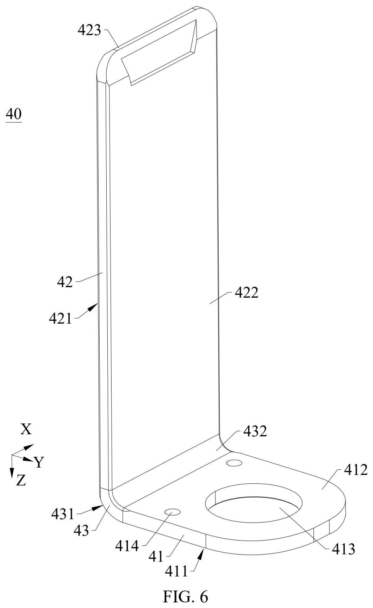

Reference can be made to FIG. 6, which is a schematic structural view of a first connector of an end cover assembly in the energy storage apparatus illustrated in FIG. 3.

In this embodiment, the first connector 40 is a metal sheet. The first connector 40 includes a first connecting portion 41, a first transition portion 42, and a first bending portion 43. The first bending portion 43 is connected between the first connecting portion 41 and the first transition portion 42. An extending direction of the first connecting portion 41 and the extending direction of the first transition portion 42 define an angle therebetween. The first connecting portion 41 is accommodated in the first assembling groove 15 of the first lower plastic member 10, and is fixed to the first terminal-post 60 by welding and is electrically connected to the first terminal-post 60. The first transition portion 42 is fixed to the first tab 320 of the electrode assembly 300 by welding and is electrically connected to the first tab 320. That is, the first connector 40 is configured to transfer the current from the electrode assembly 300 sequentially through the first transition portion 42, the first bending portion 43, and the first connecting portion 41 to the first terminal-post 60. It can be understood that the first connector 40 has a substantially L-shaped bending structure. The first connecting portion 41 and the first transition portion 42 are positioned on different planes.

Specifically, the first connecting portion 41 has a first outer surface 411 and a first inner surface 412. The first outer surface 411 and the first inner surface 412 are positioned facing away from each other in the thickness direction (i.e., the Z-axis direction) of the first connecting portion 41. The first inner surface 412 is used for connection with the heat insulating member 80.

The first connecting portion 41 further defines a first via hole 413. The first via hole 413 extends through the first outer surface 411 and the first inner surface 412. The first via hole 413 is used for the first terminal-post 60 to pass through. A hole wall of the first via hole 413 is connected to the first terminal-post 60. In this embodiment, the shape of the first connecting portion 41 matches the shape of the first assembling groove 15. The first via hole 413 is a circular hole. In some embodiments, the first via hole 413 may also be a rectangular hole, an elliptical hole, or the like, which is not strictly limited in the present disclosure.

The first connecting portion 41 further defines multiple first limiting holes 414. The multiple first limiting holes 414 each extend through the first outer surface 411 and the first inner surface 412. Each first limiting hole 414 is spaced apart from a peripheral edge of the first via hole 413, and the multiple first limiting holes 414 are defined at intervals from each other. Each first limiting hole 414 is used for one first positioning post 18 of the first lower plastic member 10 to pass through. In this embodiment, the number and shapes of the first limiting holes 414 are matched with the number and shapes of the first positioning posts 18, respectively. The first limiting hole 414 is a circular hole. The number of the first limiting holes 414 is two.

In this embodiment, the first transition portion 42 is a rectangular sheet. The first transition portion 42 has a first outer-side-surface 421, a first inner-side-surface 422, and a first end-face 423. The first outer-side-surface 421 and the first inner-side-surface 422 are positioned facing away from each other in the thickness direction (in the Y-axis direction) of the first transition portion 42. In the Y-axis direction, the first outer-side-surface 421 is positioned facing away from the first connecting portion 41 and is used for connection with the first tab 320. The first end-face 423 is connected between the first outer-side-surface 421 and the first inner-side-surface 422. In the Z-axis direction, the first end-face 423 is positioned farther away from the first connecting portion 41. Both the first inner-side-surface 422 and the first end-face 423 are used for connection with the heat insulating member 80.

In some embodiments, the first transition portion 42 further has a coined-thinned region (not shown). The coined-thinned region is a thickness-reduced region of the first transition portion 42. The coined-thinned region is provided at an end portion of the first transition portion 42 positioned farther away from the first connecting portion 41. By performing a coining-thinning treatment on the coined-thinned region, the local thickness of the first transition portion 42 is reduced, thereby reducing the heat conduction capacity of the coined-thinned region.

The first bending portion 43 has a first outer-curved-surface 431 and a first inner-curved-surface 432. The first outer-curved-surface 431 and the first inner-curved-surface 432 are positioned facing away from each other in the thickness direction of the first bending portion 43. The first outer-curved-surface 431 is connected between the first outer surface 411 and the first outer-side-surface 421. The first inner-curved-surface 432 is connected between the first inner surface 412 and the first inner-side-surface 422. The first inner-curved-surface 432 is used for connection with the heat insulating member 80.

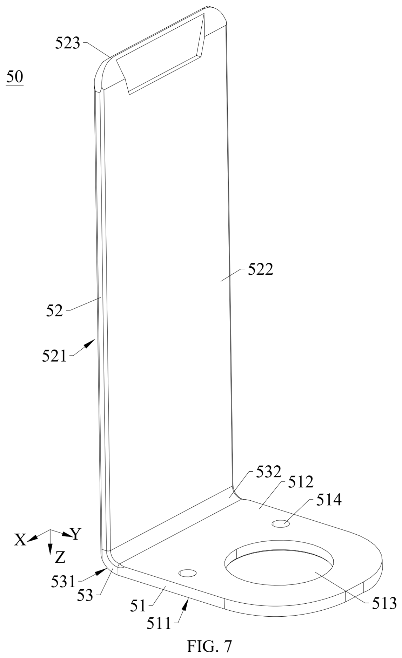

Reference can be made to FIG. 7, which is a schematic structural view of a second connector of an end cover assembly in the energy storage apparatus illustrated in FIG. 3.

In this embodiment, the structure of the second connector 50 is similar to the structure of the first connector 40. The second connector 50 is a metal sheet. The second connector 50 includes a second connecting portion 51, a second transition portion 52, and a second bending portion 53. The second bending portion 53 is connected between the second connecting portion 51 and the second transition portion 52. The second connecting portion 51 is accommodated in the second assembling groove 25 of the second lower plastic member 20, and is fixed to the second terminal-post 70 by welding and is electrically connected to the second terminal-post 70. The second transition portion 52 is fixed to the second tab 330 of the electrode assembly 300 by welding and is electrically connected to the second tab 330. That is, the second connector 50 is configured to transfer the current from the electrode assembly 300 sequentially through the second transition portion 52, the second bending portion 53, and the second connecting portion 51 to the second terminal-post 70. It can be understood that the second connector 50 has a substantially L-shaped bending structure. The second connecting portion 41 and the second transition portion 52 are positioned on different planes.

Specifically, the second connecting portion 51 has a second outer surface 511 and a second inner surface 512. The second outer surface 511 and the second inner surface 512 are positioned facing away from each other in the thickness direction (i.e., the Z-axis direction) of the second connecting portion 51. The second inner surface 512 is used for connection with the heat insulating member 80.

The second connecting portion 51 further defines a second via hole 513. The second via hole 513 extends through the second outer surface 511 and the second inner surface 512. The second via hole 513 is used for the second terminal-post 70 to pass through. A hole wall of the second via hole 513 is connected to the second terminal-post 70. In this embodiment, the shape of the second connecting portion 51 matches the shape of the second assembling groove 25. The second via hole 513 is a circular hole. In some embodiments, the second via hole 513 may also be rectangular hole, an elliptical hole, or the like, which is not strictly limited in the present disclosure.

The second connecting portion 51 further defines multiple second limiting holes 514. The multiple second limiting holes 514 each extend through the second outer surface 511 and the second inner surface 512. Each second limiting hole 514 is spaced apart from a peripheral edge of the second via hole 513, and the multiple second limiting holes 514 are defined at intervals from each other. Each second limiting hole 514 is used for one second positioning post 28 of the second lower plastic member 20 to pass through. In this embodiment, the number and shapes of the second limiting holes 514 are matched with the number and shapes of the second positioning posts 28, respectively. The second limiting hole 514 is a circular hole. The number of the second limiting holes 514 is two.

In this embodiment, the second transition portion 52 is a rectangular sheet. The second transition portion 52 has a second outer-side-surface 521, a second inner-side-surface 522, and a second end-face 523. The second outer-side-surface 521 and the second inner-side-surface 522 are positioned facing away from each other in the thickness direction (in the Y-axis direction) of the second transition portion 52. In the Y-axis direction, the second outer-side-surface 521 is positioned facing away from the second connecting portion 51, and is used for connection with the second tab 330. The second end-face 523 is connected between the second outer-side-surface 521 and the second inner-side-surface 522. In the Z-axis direction, the second end-face 523 is positioned farther away from the second connecting portion 51. Both the second inner-side-surface 522 and the second end-face 523 are used for connection with the heat insulating member 80.

In some embodiments, the second transition portion 52 further has a coined-thinned region (not shown). The coined-thinned region is a thickness-reduced region of the second transition portion 52. The coined-thinned region is provided at an end portion of the second transition portion 52 positioned farther away from the second connecting portion 51. By performing a coining-thinning treatment on the coined-thinned region, the local thickness of the second transition portion 52 is reduced, thereby reducing the heat conduction capacity of the coined-thinned region.

The second bending portion 53 has a second outer-curved-surface 531 and a second inner-curved-surface 532. The second outer-curved-surface 531 and the second inner-curved-surface 532 are positioned facing away from each other in the thickness direction of the second bending portion 53. The second outer-curved-surface 531 is connected between the second outer surface 511 and the second outer-side-surface 521. The second inner-curved-surface 532 is connected between the second inner surface 512 and the second inner-side-surface 522. The second inner-curved-surface 532 is used for connection with the heat insulating member 80.

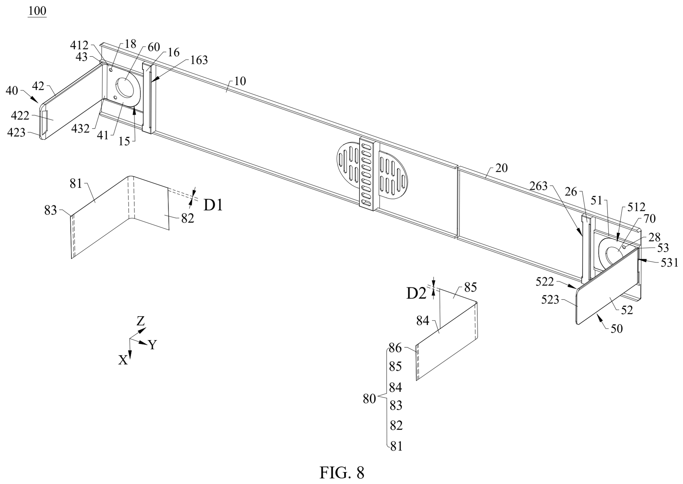

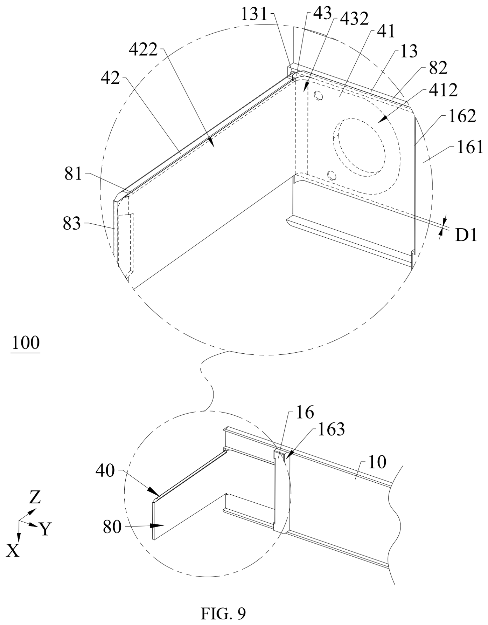

Reference can be made to FIG. 3, FIG. 8, and FIG. 9 together, where FIG. 8 is a partial exploded schematic structural view of the end cover assembly illustrated in FIG. 3, and FIG. 9 is a partial schematic structural view of the end cover assembly illustrated in FIG. 8. It may be noted that, in FIG. 8, a part between two adjacent dotted lines represents an overlapping part between two adjacent heat insulating members. In FIG. 9, the dotted lines are boundary lines through which the first connector of the first heat insulating member is seen. FIG. 8 schematically illustrates the assembly structure of the connector, the heat insulating member, and the lower plastic member, and FIG. 9 schematically illustrates, by taking the assembly structure of the first connector, the first heat insulating member, and the first lower plastic as an example. The assembly structure of the second connector, the second heat insulating member, and the second lower plastic member is the same as the assembly structure of the first connector, the first heat insulating member, and the first lower plastic shown in FIG. 9, and therefore is not schematically illustrated in FIG. 9.

In this embodiment, the first connector 40 is mounted at the first lower plastic member 10. The first connecting portion 41 of the first connector 40 is accommodated in the first assembling groove 15 of the first lower plastic member 10. The first outer surface 411 of the first connecting portion 41 is connected to the first groove-bottom-face 151 of the first assembling groove 15. The two first positioning posts 18 respectively pass through the two first limiting holes 414 of the first connecting portion 41, to limit and fix the first connector 40 on the first lower plastic member 10. The first via hole 413 of the first connecting portion 41 is coaxial with the first through-hole 17 of the first lower plastic member 10. In the Y-axis direction, the first inner-side-surface 422 of the first transition portion 42 is positioned facing towards and spaced apart from the first protrusion 16. The first transition portion 42 extends in a direction away from the first lower plastic member 10.

The second connector 50 is mounted at the second lower plastic member 20. The second connecting portion 51 of the second connector 50 is accommodated in the second assembling groove 25 of the second lower plastic member 20. The second outer surface 511 of the second connecting portion 51 is connected to the second groove-bottom-face 251 of the second assembling groove 25. The two second positioning posts 28 respectively pass through the two second limiting holes 514 of the second connecting portion 51, to limit and fix the second connector 50 on the second lower plastic member 20. The second via hole 513 of the second connecting portion 51 is coaxial with the second through-hole 27 of the second lower plastic member 20. In the Y-axis direction, the second inner-side-surface 522 of the second transition portion 52 is positioned facing towards and spaced apart from the second protrusion 26. The second transition portion 52 extends in a direction away from the second lower plastic member 20.

In this embodiment, the heat insulating member 80 has characteristics of being smooth, hardly displaced, high-temperature resistant, small in volume, non-reactive with electrolyte, capable of blocking heat conduction, and the like. The smooth surface of the heat insulating member 80 can promote the circulation of the electrolyte in the vicinity of the heat insulating member 80. The heat insulating member 80 may be, but is not limited to, made of a material that insulates heat and does not easily fall off, such as a polyimide tape, a Teflon tape, or a Teflon coating. Exemplarily, the heat insulating member 80 is a high-temperature adhesive.

The heat insulating member 80 includes a first side-heat-insulating-member 81, a first end-heat-insulating-member 82, a first tail-heat-insulating-member 83, a second side-heat-insulating-member 84, a second end-heat-insulating-member 85, and a second tail-heat-insulating-member 86. Specifically, the first side-heat-insulating-member 81, the first end-heat-insulating-member 82, and the first tail-heat-insulating-member 83 cover the first connector 40 and a part of the first lower plastic member 10. The second side-heat-insulating-member 84, the second end-heat-insulating-member 85, and the second tail-heat-insulating-member 86 cover the second connector 50 and a part of the second lower plastic member 20.

As illustrated in FIG. 8 and FIG. 9, the first side-heat-insulating-member 81 and the first end-heat-insulating-member 82 partially overlap and form a thickened region, and the first side-heat-insulating-member 81 and the first tail-heat-insulating-member 83 partially overlap and form a thickened region. The second side-heat-insulating-member 84 and the second end-heat-insulating-member 85 partially overlap and form a thickened region, and the second side-heat-insulating-member 84 and the second tail-heat-insulating-member 86 partially overlap and form a thickened region.

In this embodiment, the first side-heat-insulating-member 81 covers the first inner-side-surface 422 of the first transition portion 42 and the first inner-curved-surface 432 of the first bending portion 43. The first side-heat-insulating-member 81 is configured to separate both the first transition portion 42 and the first bending portion 43 from the electrode-assembly body 310, so as to avoid defects such as thermal shrinkage, melting-through, and damage of the separator that are caused by contact between both the first transition portion 42 and the first bending portion 43 and the separator between the positive electrode sheet and the negative electrode sheet in the electrode-assembly body 310, and to avoid direct contact between the positive electrode sheet and the negative electrode sheet, thereby avoiding a short circuit of the electrode assembly. The first side-heat-insulating-member 81 has a length (i.e., a dimension in the Z-axis direction) of 100 mm and a width (i.e., a dimension in the X-axis direction) of 55 mm. The length and width of the first side-heat-insulating-member 81 can also be determined according to the actual application situations, which is not strictly limited in the present disclosure.

In this embodiment, the first end-heat-insulating-member 82 covers the first inner surface 412 of the first connecting portion 41 and the first inner-curved-surface 432 of the first bending portion 43. The first end-heat-insulating-member 82 is configured to separate both the first bending portion 43 and the first connecting portion 41 from the electrode-assembly body 310, so as to avoid defects such as thermal shrinkage, melting-through, and damage of the separator that are caused by contact between both the first connecting portion 41 and the first bending portion 43 and the separator between the positive electrode sheet and the negative electrode sheet in the electrode-assembly body 310, and to avoid direct contact between the positive electrode sheet and the negative electrode sheet, thereby avoiding a short circuit of the electrode assembly. The first end-heat-insulating-member 82 has a length (i.e., a dimension in the Y-axis direction) of 59 mm and a width (i.e., a dimension in the X-axis direction) of 55 mm. The length and width of the first end-heat-insulating-member 82 can also be determined according to the actual application situations, which is not strictly limited in the present disclosure.

When the first protrusion 16 exceeds the first boss 13 relative to the first bottom-face 112, and the first protrusion-inner-side-surface 162 of the first protrusion 16 is connected to the first boss-face 131, the first end-heat-insulating-member 82 not only covers the first inner surface 412 of the first connecting portion 41 and the first inner-curved-surface 432 of the first bending portion 43, but also covers and is connected to the first boss-face 131 around the first connecting portion 41, and an edge of the first end-heat-insulating-member 82 that is away from the first side-heat-insulating-member 81 is adhered to the first protrusion-inner-side-surface 162. Therefore, the contact area between the first end-heat-insulating-member 82 and the first lower plastic member 10 is increased, the instability of the first end-heat-insulating-member 82 when the first end-heat-insulating-member 82 is impacted by the electrolyte is reduced, and the attachment effect of the first end-heat-insulating-member 82 on the first lower plastic member 10. In addition, the first protrusion-inner-side-surface 162 also plays a role in limiting the adhesion of the first end-heat-insulating-member 82, thereby improving the adhesion efficiency of the first end-heat-insulating-member 82.

In some embodiments, the first end-heat-insulating-member 82 not only covers the first inner surface 412 of the first connecting portion 41 and the first inner-curved-surface 432 of the first bending portion 43, but also covers and is connected to the first protrusion-face 161 of the first protrusion 16 and the first boss-face 131 of the first boss 13. Therefore, the contact area between the first end-heat-insulating-member 82 and the first lower plastic member 10 is further increased, and the attachment effect of the first end-heat-insulating-member 82 on the first lower plastic member 10 is improved.

In some embodiments, the first end-heat-insulating-member 82 not only covers the first inner surface 412 of the first connecting portion 41 and the first inner-curved-surface 432 of the first bending portion 43, but also covers and is connected to the first boss-face 131 of the first boss 13, the first protrusion-face 161 of the first protrusion 16, and the first protrusion-outer-side-surface 163. Even in some implementations, one end of the first end-heat-insulating-member 82 away from the first side-heat-insulating-member 81 may extend beyond the first boss 13 to be connected to the first bottom-face 112, thereby effectively blocking heat conduction between the first connector 40 and the electrode-assembly body 310.

It may be noted that as illustrated in FIG. 9, the width of the first end-heat-insulating-member 82 is larger than the width of the first connecting portion 41 of the first connector 40. In the width direction of the first lower plastic member 10, the width of a part of the first end-heat-insulating-member 82 exceeding the first connecting portion 41 is a first excess width D1. It can be understood that in the width direction of the first lower plastic member 10, the first end-heat-insulating-member 82 completely covers the first inner surface 412 of the first connecting portion 41 and a part of the first boss-face 131 near the first connecting portion 41. Therefore, the first lower plastic member 10 is completely separated from the electrode-assembly body 310, and the heat conduction between the first connector 40 and a part of the first lower plastic member 10 near the first connector 40 is blocked, thereby avoiding the influence of high temperature on the electrode assembly 300. In some embodiments, the width of the first end-heat-insulating-member 82 may also be larger than the width of the first boss 13, and the first end-heat-insulating-member 82 not only covers the first inner surface 412 and the first boss-face 131, but also covers the part of the first bottom-face 112 of the first lower plastic member 10 at the side of the first boss 13 positioned facing away from the first assembling groove 15. Therefore, the contact area between the first end-heat-insulating-member 82 and the first lower plastic member 10 is further increased, which is more conducive to separating the first lower plastic member 10 from the electrode-assembly body 310, thereby blocking the heat conduction between the electrode-assembly body 310 and both the first connector 40 and the part of the first lower plastic member 10 near the first connector 40, and avoiding the influence of high temperature on the electrode assembly 300. In some embodiments, the width of the first end-heat-insulating-member 82 may also be larger than the width of the first boss 13. The first end-heat-insulating-member 82 not only covers the first inner surface 412 and the first boss-face 131, but also covers the part of the first bottom-face 112 of the first lower plastic member 10 at the side of the first boss 13 positioned facing away from the first assembling groove 15. Therefore, the contact area between the first end-heat-insulating-member 82 and the first lower plastic member 10 is further increased, which is more conducive to separating the first lower plastic member 10 from the electrode-assembly body 310, thereby blocking the heat conduction from the first connector 40 and the part of the first lower plastic member 10 near the first connector 40 to the electrode-assembly body 300 to the greatest extent, and further avoiding the influence of high temperature on the electrode assembly 300.

Since the heat conduction capacity from the first connector 40 to the first lower plastic member 10 is relatively poor and the heat conduction capacity from the first connector 40 to the electrode-assembly body 310 is good, the width of the thickened region formed by the overlapping of the first end-heat-insulating-member 82 and the first side-heat-insulating-member 81 needs to be larger than the first excess width D1. Exemplarily, the ratio of the width of the thickened region formed by the overlapping of the first end-heat-insulating-member 82 and the first side-heat-insulating-member 81 to the first excess width D1 is greater than or equal to 1.1 and less than or equal to 3. Therefore, not only can the heat conduction between the first bending portion 43 and the electrode-assembly body 310 be sufficiently avoided, but also excessive material consumption of the heat insulating member 80 can be avoided, thereby preventing waste.

In addition, the length of the thickened region formed by the overlapping of the first end-heat-insulating-member 82 and the first side-heat-insulating-member 81 is larger than the length of the first inner-curved-surface 432, and the ratio of the area of the thickened region to the area of the first inner-curved-surface 432 is greater than or equal to 1.2 and less than or equal to 5, so as to further effectively insulate the heat conduction between the first connector 40 and the electrode-assembly body 310.

Further, the first end-heat-insulating-member 82 covers the first connecting portion 41 and a gap between the first connecting portion 41 and the first assembling groove 15. Therefore, the electrolyte is prevented from penetrating and adhering to the first connecting portion 41 and the gap between the first connecting portion 41 and the first assembling groove 15, and ensuring the stability of the electrolyte.

In this embodiment, the first tail-heat-insulating-member 83 covers the first end-face 423 of the first transition portion 42 and a part of the first inner-side-surface 422 of the first transition portion 42. The first tail-heat-insulating-member 83 is configured to better separate the electrode-assembly body 310 from the first tab 320 and block the heat conduction from the first tab 320 to the electrode-assembly body 310 through the first transition portion 42.

In this embodiment, the first side-heat-insulating-member 81 and the first end-heat-insulating-member 82 partially overlap each other. The overlapping part of the first side-heat-insulating-member 81 and the first end-heat-insulating-member 82 covers the first bending portion 43. It can be understood that the overlapping part of the first side-heat-insulating-member 81 and the first end-heat-insulating-member 82 increases the thickness of the high-temperature adhesive and forms a thickened region. The thickened region completely covers the first inner-curved-surface 432 of the first bending portion 43.

In other embodiments, the first side-heat-insulating-member 81 may also cover a part of the first inner surface 412 of the first connecting portion 41, and at the same time, the first end-heat-insulating-member 82 may also cover a part of the first inner-side-surface 422 of the first transition portion 42. Therefore, the overlapping part of the first side-heat-insulating-member 81 and the first end-heat-insulating-member 82 may also cover a part of the first transition portion 42 and a part of the first connecting portion 41 in addition to covering the first bending portion 43. It can be understood that the thickened region of the first side-heat-insulating-member 81 and the first end-heat-insulating-member 82 completely covers the first inner-curved-surface 432, and the part of the first inner-side-surface 422 and the part of the first inner surface 412 that are respectively connected to both sides of the first inner-curved-surface 432.

In other embodiments, the first end-heat-insulating-member 82 may also cover a part of the first inner-side-surface 422 of the first transition portion 42. Thus, the overlapping part of the first side-heat-insulating-member 81 and the first end-heat-insulating-member 82 may cover a part of the first transition portion 42 in addition to covering the first bending portion 43. It can be understood that the thickened region of the first side-heat-insulating-member 81 and the first end-heat-insulating-member 82 completely covers the first inner-curved-surface 432 of the first bending portion 43 and the part of the first inner-side-surface 422 at one side of the first inner-curved-surface 432.

In other embodiments, the first side-heat-insulating-member 81 may also cover a part of the first inner surface 412 of the first connecting portion 41. Thus, the overlapping part of the first side-heat-insulating-member 81 and the first end-heat-insulating-member 82 may also cover a part of the first connecting portion 41 in addition to covering the first bending portion 43. It can be understood that the thickened region of the first side-heat-insulating-member 81 and the first end-heat-insulating-member 82 completely covers the first inner-curved-surface 432 of the first bending portion 43 and the part of the first inner surface 412 at the other side of the first inner-curved-surface 432.

In this embodiment, the first side-heat-insulating-member 81 and the first tail-heat-insulating-member 83 also partially overlap. An overlapping part of the first side-heat-insulating-member 81 and the first tail-heat-insulating-member 83 covers the first inner-side-surface 422 of the first transition portion 42. It can be understood that the overlapping part of the first side-heat-insulating-member 81 and the first tail-heat-insulating-member 83 increases the thickness of the high-temperature adhesive and forms a thickened region. The thickened region completely covers the first inner-side-surface 422 of the first transition portion 42.

In other embodiments, the first side-heat-insulating-member 81 may also cover a part of the first end-face 423 of the first transition portion 42, and the overlapping part of the first side-heat-insulating-member 81 and the first tail-heat-insulating-member 83 may also cover the first end-face 423 in addition to covering the first inner-side-surface 422 of the first transition portion 42. It can be understood that the thickened region of the first side-heat-insulating-member 81 and the first tail-heat-insulating-member 83 completely covers the first inner-side-surface 422 and the first end-face 423 of the first transition portion 42.

In other embodiments, the first tail-heat-insulating-member 83 covers only the first end-face 423 of the first transition portion 42, the first side-heat-insulating-member 81 covers a part of the first end-face 423 of the first transition portion 42 in addition to covering the first inner-side-surface 422 of the first transition portion 42, and the overlapping part of the first side-heat-insulating-member 81 and the first tail-heat-insulating-member 83 covers the first end-face 423 of the first transition portion 42. It can be understood that the thickened region of the first side-heat-insulating-member 81 and the first tail-heat-insulating-member 83 completely covers the first end-face 423 of the first transition portion 42.

It may be noted that the first side-heat-insulating-member 81, the first end-heat-insulating-member 82, and the first tail-heat-insulating-member 83 may be integrally formed, or the first side-heat-insulating-member 81, the first end-heat-insulating-member 82, and the first tail-heat-insulating-member 83 may be separately formed to accommodate different requirements in actual production applications. In some embodiments, the heat insulating member 80 includes the first end-heat-insulating-member 82 and the first side-heat-insulating-member 81. The first end-heat-insulating-member 82 and the first side-heat-insulating-member 81 are integrally formed, or the first end-heat-insulating-member 82 and the first side-heat-insulating-member 81 are separately formed. One end of the first side-heat-insulating-member 81 away from the first end-heat-insulating-member 82 extends to the first end-face 423 of the first transition portion 42, and the first side-heat-insulating-member 81 covers the first inner-side-surface 422 and at least a part of the first end-face 423, which is not strictly limited in the present disclosure.

It can be understood that the heat insulating member 80 includes a thickened region. The thickened region can be understood as a region in which the thickness of the heat insulating member 80 is increased. The thickened region of the heat insulating member 80 covering the first connector 40 may completely cover the first inner-curved-surface 432 of the first bending portion 43. Alternatively, the thickened region of the heat insulating member 80 covering the first connector 40 may completely cover the first inner-curved-surface 432 of the first bending portion 43, and a part of the first inner-side-surface 422 and a part of the first inner surface 412 that are connected to the first inner-curved-surface 432 at both sides of the first inner-curved-surface 432. Alternatively, the thickened region of the heat insulating member 80 covering the first connector 40 may completely cover the first inner-curved-surface 432 of the first bending portion 43, and a part of the first inner-side-surface 422 that is connected to the first inner-curved-surface 432 at one side of the first inner-curved-surface 432. Alternatively, the thickened region of the heat insulating member 80 may completely cover the first inner-curved-surface 432 of the first bending portion 43, and a part of the first inner surface 412 that is connected to the first inner-curved-surface 432 at the other side of the first inner-curved-surface 432.

In this embodiment, the second side-heat-insulating-member 84 covers the second inner-side-surface 522 of the second transition portion 52 and the second inner-curved-surface 532 of the second bending portion 53. The second side-heat-insulating-member 84 is configured to separate both the second transition portion 52 and the second bending portion 53 from the electrode-assembly body 310, so as to avoid defects such as thermal shrinkage, melting-through, and damage of the separator that are caused by contact between both the second transition portion 52 and the second bending portion 53 and the separator between the positive electrode sheet and the negative electrode sheet in the electrode-assembly body 310, and to avoid direct contact between the positive electrode sheet and the negative electrode sheet, thereby avoiding a short circuit of the electrode assembly. The second side-heat-insulating-member 84 has a length (i.e., a dimension in the Z-axis direction) of 100 mm and a width (i.e., a dimension in the X-axis direction) of 35 mm. The length and width of the second side-heat-insulating-member 84 can also be determined according to the actual application situations, which is not strictly limited in the present disclosure.

In this embodiment, the second end-heat-insulating-member 85 covers the second inner surface 512 of the second connecting portion 51 and the second inner-curved-surface 532 of the second bending portion 53. The second end-heat-insulating-member 85 is configured to separate the second bending portion 53 and the second connecting portion 51 from the electrode-assembly body 310, so as to avoid defects such as thermal shrinkage, melting-through, and damage of the separator that are caused by contact between both the second connecting portion 51 and the second bending portion 53 and the separator between the positive electrode sheet and the negative electrode sheet in the electrode-assembly body 310, and to avoid direct contact between the positive electrode sheet and the negative electrode sheet, thereby avoiding a short circuit of the electrode assembly. The second end-heat-insulating-member 85 has a length (i.e., a dimension in the Y-axis direction) of 44 mm and a width (i.e., a dimension in the X-axis direction) of 35 mm. The length and width of the second end-heat-insulating-member 85 can also be determined according to the actual application situations, which is not strictly limited in the present disclosure.

When the second protrusion 26 exceeds the second boss 23 relative to the second bottom-face 212, and the second protrusion-inner-side-surface 262 of the second protrusion 26 is connected to the second boss-face 231, the second end-heat-insulating-member 85 not only covers the second inner surface 512 of the second connecting portion 51 and the second inner-curved-surface 532 of the second bending portion 53, but also covers and is connected to the second boss-face 231 around the second connecting portion 51, and an edge of the second end-heat-insulating-member 85 that is away from the second side-heat-insulating-member 84 is adhered to the second protrusion-inner-side-surface 262. Therefore, the contact area between the second end-heat-insulating-member 85 and the second lower plastic member 20 is increased, the instability of the second end-heat-insulating-member 85 when the second end-heat-insulating-member 85 is impacted by the electrolyte is reduced, and the attachment effect of the second end-heat-insulating-member 85 on the second lower plastic member 20. In addition, the second protrusion-inner-side-surface 262 also plays a role in limiting the adhesion of the second end-heat-insulating-member 85, thereby improving the adhesion efficiency of the second end-heat-insulating-member 85.

In some embodiments, the second end-heat-insulating-member 85 not only covers the second inner surface 512 of the second connecting portion 51 and the second inner-curved-surface 532 of the second bending portion 53, but also covers and is connected to the second protrusion-face 261 and the second boss-face 231 of the second boss 23. Therefore, the contact area between the second end-heat-insulating-member 85 and the second lower plastic member 20 is further increased, and the attachment effect of the second end-heat-insulating-member 85 on the second lower plastic member 20 is improved.

In some embodiments, the second end-heat-insulating-member 85 not only covers the second inner surface 512 of the second connecting portion 51 and the second inner-curved-surface 532 of the second bending portion 53, but also covers is connected to the second boss-face 231 of the second boss 23, the second protrusion-face 261 of the second protrusion 26, and the second protrusion-outer-side-surface 263. Even in some implementations, one end of the second end-heat-insulating-member 85 away from the second side-heat-insulating-member 84 may extend beyond the second boss 23 to be connected to the first bottom-face 112, thereby effectively blocking heat conduction between the second connector 50 and the electrode-assembly body 310.

It may be noted that the width of the second end-heat-insulating-member 85 is larger than the width of the second connecting portion 51 of the second connector 50. In the width direction of the second lower plastic member 20, the width of a part of the second end-heat-insulating-member 85 exceeding the second connecting portion 51 is a second excess width D2. It can be understood that in the width direction of the second lower plastic member 20, the second end-heat-insulating-member 85 completely covers the second inner surface 512 of the second connecting portion 51 and the second boss-face 231 near the second connecting portion 51. Therefore, the second lower plastic member 20 is completely separated from the electrode-assembly body 310, and the heat conduction between the second connector 50 and a part of the second lower plastic member 20 near the second connector 50 is blocked, thereby avoiding the influence of high temperature on the electrode assembly 300. In some embodiments, the width of the second end-heat-insulating-member 85 may also be larger than the width of the second boss 23. The second end-heat-insulating-member 85 not only covers the second inner surface 512 and the second boss-face 231, but also covers the second bottom-face 212 of the second lower plastic member 20 at the side of the second boss 23 positioned facing away from the second assembling groove 25. Therefore, the contact area between the second end-heat-insulating-member 85 and the second lower plastic member 20 is further increased, which is more conducive to separating the second lower plastic member 20 from the electrode-assembly body 310, thereby blocking the heat conduction from the second connector 50 and the part of the second lower plastic member 20 near the second connector 50 to the electrode-assembly body 300 to the greatest extent, and further avoiding the influence of high temperature on the electrode assembly 300.

Since the heat conduction capacity from the second connector 50 to the second lower plastic member 20 is relatively poor and the heat conduction capacity from the second connector 50 to the electrode-assembly body 310 is good, the width of the thickened region formed by the overlapping of the second end-heat-insulating-member 85 and the second side-heat-insulating-member 84 needs to be larger than the second excess width D2. Exemplarily, the ratio of the width of the thickened region formed by the overlapping of the second end-heat-insulating-member 85 and the second side-heat-insulating-member 84 to the second excess width D2 is greater than or equal to 1.1 and less than or equal to 3. Therefore, not only can the heat conduction between the second bending portion 53 and the electrode-assembly body 310 be sufficiently avoided, but also excessive material consumption of the heat insulating member 80 can be avoided, thereby preventing waste.

In addition, the length of the thickened region formed by the overlapping of the second end-heat-insulating-member 85 and the second side-heat-insulating-member 84 is larger than the length of the second inner-curved-surface 532, and the ratio of the area of the thickened region to the area of the second inner-curved-surface 532 is greater than or equal to 1.2 and less than or equal to 5, so as to further effectively insulate the heat conduction between the second connector 50 and the electrode-assembly body 310.

Further, the second end-heat-insulating-member 85 covers the second connecting portion 51 and a gap between the second connecting portion 51 and the second assembling groove 25. Therefore, the electrolyte is prevented from penetrating and adhering to the second connecting portion 51 and the gap between the second connecting portion 51 and the second assembling groove 25, and ensuring the stability of the electrolyte.

In this embodiment, the second tail-heat-insulating-member 86 covers the second end-face 523 of the second transition portion 52 and a part of the second inner-side-surface 522 of the second transition portion 52. The second tail-heat-insulating-member 86 is configured to better separate the electrode-assembly body 310 from the second tab 330 and block the heat conduction from the second tab 330 to the electrode-assembly body 310 through the second transition portion 52.

In this embodiment, the second side-heat-insulating-member 84 and the second end-heat-insulating-member 85 partially overlap each other. The overlapping part of the second side-heat-insulating-member 84 and the second end-heat-insulating-member 85 covers the second bending portion 53. It can be understood that the overlapping part of the second side-heat-insulating-member 84 and the second end-heat-insulating-member 85 increases the thickness of the high-temperature adhesive and forms a thickened region. The thickened region completely covers the second inner-curved-surface 532 of the second bending portion 53.

In other embodiments, the second side-heat-insulating-member 84 may also cover a part of the second inner surface 512 of the second connecting portion 51, and at the same time, the second end-heat-insulating-member 85 may also cover a part of the second inner-side-surface 522 of the second transition portion 52. Therefore, the overlapping part of the second side-heat-insulating-member 84 and the second end-heat-insulating-member 85 may also cover a part of the second transition portion 52 and a part of the second connecting portion 51 in addition to covering the second bending portion 53. It can be understood that the thickened region of the second side-heat-insulating-member 84 and the second end-heat-insulating-member 85 completely covers the second inner-curved-surface 532 of the second bending portion 53, the part of the second inner-side-surface 522 and the part of the second inner surface 512 that are respectively positioned at both sides of the second inner-curved-surface 532.

In other embodiments, the second end-heat-insulating-member 85 may also cover a part of the second inner-side-surface 522 of the second transition portion 52. Thus, the overlapping part of the second side-heat-insulating-member 84 and the second end-heat-insulating-member 85 may cover a part of the second transition portion 52 in addition to covering the second bending portion 53. It can be understood that the thickened region of the second side-heat-insulating-member 84 and the second end-heat-insulating-member 85 completely covers the second inner-curved-surface 532 of the second bending portion 53 and the part of the second inner-side-surface 522 at one side of the second inner-curved-surface 532.

In other embodiments, the second side-heat-insulating-member 84 may also cover a part of the second inner surface 512 of the second connecting portion 51. Thus, the overlapping part of the second side-heat-insulating-member 84 and the second end-heat-insulating-member 85 may also cover a part of the second connecting portion 51 in addition to covering the second bending portion 53. It can be understood that the thickened region of the second side-heat-insulating-member 84 and the second end-heat-insulating-member 85 completely covers the second inner-curved-surface 532 of the second bending portion 53 and the part of the second inner surface 512 at the other side of the second inner-curved-surface 532.

In this embodiment, the second side-heat-insulating-member 84 and the second tail-heat-insulating-member 86 also partially overlap. The overlapping part of the second side-heat-insulating-member 84 and the second tail-heat-insulating-member 86 covers the second inner-side-surface 522 of the second transition portion 52. It can be understood that the overlapping part of the second side-heat-insulating-member 84 and the second tail-heat-insulating-member 86 increases the thickness of the high-temperature adhesive and forms a thickened region. The thickened region completely covers the second inner-side-surface 522 of the second transition portion 52.

In other embodiments, the second side-heat-insulating-member 84 may also cover a part of the second end-face 523 of the second transition portion 52, and the overlapping part of the second side-heat-insulating-member 84 and the second tail-heat-insulating-member 86 may also cover the second end-face 523 in addition to covering the second inner-side-surface 522 of the second transition portion 52. It can be understood that the thickened region of the second side-heat-insulating-member 84 and the second tail-heat-insulating-member 86 completely covers the second inner-side-surface 522 and the second end-face 523 of the second transition portion 52.

In other embodiments, the second tail-heat-insulating-member 86 covers only the second end-face 523 of the second transition portion 52, the second side-heat-insulating-member 84 covers a part of the second end-face 523 of the second transition portion 52 in addition to covering the second inner-side-surface 522 of the second transition portion 52, and the overlapping part of the second side-heat-insulating-member 84 and the second tail-heat-insulating-member 86 covers the second end-face 523 of the second transition portion 52. It can be understood that the thickened region of the second side-heat-insulating-member 84 and the second tail-heat-insulating-member 86 completely covers the second end-face 523 of the second transition portion 52.

It may be noted that the second side-heat-insulating-member 84, the second end-heat-insulating-member 85, and the second tail-heat-insulating-member 86 may be integrally formed, or the second side-heat-insulating-member 84, the second end-heat-insulating-member 85, and the second tail-heat-insulating-member 86 may be separately formed to accommodate different requirements in actual production applications. In some embodiments, the heat insulating member 80 includes a second side thermal insulation 84 and a second end thermal insulation 85. The second side-heat-insulating-member 84 and the second end-heat-insulating-member 85 are integrally formed, or the second side-heat-insulating-member 84 and the second end-heat-insulating-member 85 are separately formed. One end of the second side-heat-insulating-member 84 away from the second end-heat-insulating-member 85 extends to the second end-face 523 of the second transition portion 52, and the second side-heat-insulating-member 84 covers the second inner-side-surface 522 and at least a part of the second end-face 523, which is not strictly limited in the present disclosure.

It can be understood that the thickened region of the heat insulating member 80 covering the second connector 50 may completely cover the second inner-curved-surface 532 of the second bending portion 53. Alternatively, the thickened region of the heat insulating member 80 covering the second connector 50 may completely cover the second inner-curved-surface 532 of the second bending portion 53, and a part of the second inner-side-surface 522 and a part of the second inner surface 512 that are connected to the second inner-curved-surface 532 at both sides of the second inner-curved-surface 532. Alternatively, the thickened region of the heat insulating member 80 covering the second connector 50 may completely cover the second inner-curved-surface 532 of the second bending portion 53, and a part of the second inner-side-surface 522 that is connected to the second inner-curved-surface 532 at one side of the second inner-curved-surface 532. Alternatively, the thickened region of the heat insulating member 80 covering the second connector 50 may completely cover the second inner-curved-surface 532 of the second bending portion 53, and a part of the second inner surface 512 that is connected to the second inner-curved-surface 532 at the other side of the second inner-curved-surface 532.

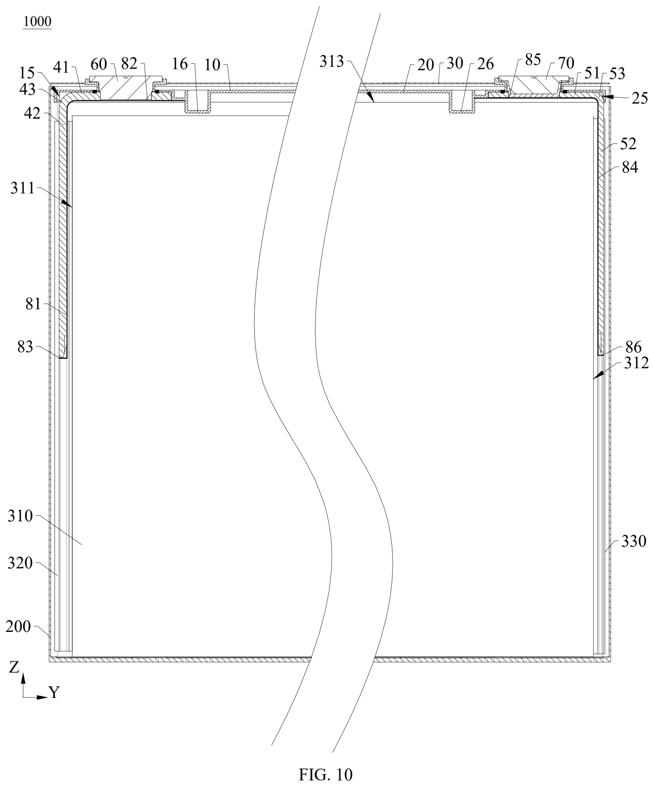

Reference can be made to FIG. 3, FIG. 9, and FIG. 10 together, where FIG. 10 is a schematic cross-sectional structural view of the energy storage apparatus illustrated in FIG. 2.

In this embodiment, the first terminal-post 60, the second terminal-post 70, the first connector 40, the second connector 50, the first lower plastic member 10, the second lower plastic member 20, and multiple heat insulating members 80 are mounted together on the end cover 30 to form the end cover assembly 100.

Specifically, in the Y-axis direction, the first lower plastic member 10 is located at one end of the second lower plastic member 20 away from the second boss 23. One end of the first lower plastic member 10 away from the first boss 13 is connected to the end of the second lower plastic member 20 away from the second boss 23. The first top-face 111 of the first lower plastic member 10 and the second top-face 211 of the second lower plastic member 20 have the same orientation and are both connected to the lower surface 32 of the end cover 30.

The first through-hole 17 of the first lower plastic member 10 is coaxial with the first terminal-post through-hole 33 of the end cover 30. That is, the first via hole 413 of the first connector 40 is coaxial with the first terminal-post through-hole 33. The first terminal-post 60 passes through the first terminal-post through-hole 33, the first through-hole 17, and the first via hole 413 in sequence. The peripheral side of the first terminal-post 60 abuts with the hole wall of the first via hole 413. The first terminal-post 60 and the first connecting portion 41 are fixed by laser welding, to realize electrical conduction between the first terminal-post 60 and the first connector 40. The first terminal-post 60 and the end cover 30 are insulated and sealed by a seal (not shown), which not only avoids a short circuit between the first terminal-post 60 and the end cover 30, but also avoids the electrolyte inside the energy storage apparatus 1000 from flowing out of the energy storage apparatus 1000.

It may be noted that the smooth surface of the first end-heat-insulating-member 82 can refract the laser energy generated when the first connecting portion 41 and the first terminal-post 60 are welded, thereby avoiding the influence of the laser energy on the performance of the first end-heat-insulating-member 82.

The second through-hole 27 of the second lower plastic member 20 is coaxial with the second terminal-post through-hole 34 of the end cover 30. That is, the second via hole 513 of the second connector 50 is coaxial with the second terminal-post through-hole 34. The second terminal-post 70 passes through the second terminal-post through-hole 34, the second through-hole 27, and the second via hole 513 in sequence. The peripheral side of the second terminal-post 70 abuts against the hole wall of the second via hole 513. The second terminal-post 70 and the second connecting portion 51 are fixed by laser welding, to realize electrical conduction between the second terminal-post 70 and the second connector 50. The second terminal-post 70 is insulated and sealed from the end cover 30 by a seal (not shown), which not only avoids a short circuit between the second terminal-post 70 and the end cover 30, but also avoids the electrolyte inside the energy storage apparatus 1000 from flowing out of the energy storage apparatus 1000.

It may be noted that the smooth surface of the second end-heat-insulating-member 85 can refract the laser energy generated when the second connecting portion 51 and the second terminal-post 70 are laser welded, so as to avoid the laser energy affecting the performance of the second end-heat-insulating-member 85.

In this embodiment, the length of the first lower plastic member 10 is larger than the length of the second lower plastic member 20. The width of the first lower plastic member 10 is equal to the width of the second lower plastic member 20. The sum of the length of the first lower plastic member 10 and the length of the second lower plastic member 20 is less than or equal to the length of the lower plastic member.

It can be explained that the first body 11 of the first lower plastic member 10 and the second body 21 of the second lower plastic member 20 are connected to form a body of the lower plastic member. The first top-face 111 of the first lower plastic member 10 and the second top-face 211 of the second lower plastic member 20 form a top face of the lower plastic member. The first bottom-face 112 of the first lower plastic member 10 and the second bottom-face 212 of the second lower plastic member 20 form a bottom face of the lower plastic member.

The end cover assembly 100 is assembled with the electrode assembly 300. The bottom face of the lower plastic member is positioned facing towards the top surface 313 of the electrode assembly 300. Both the first protrusion 16 and the second protrusion 26 abut against the top surface 313 of the electrode-assembly body 310. The first connector 40 and the second connector 50 are respectively positioned at opposite sides in the length direction of the electrode-assembly body 310. The first connector 40 and the first tab 320 are connected by welding. The first side-heat-insulating-member 81, the first end-heat-insulating-member 82, and the first tail-heat-insulating-member 83 are positioned between both the first connector 40 and a part of the first lower plastic member 10 and the electrode-assembly body 310. Therefore, a short circuit caused by the contact between the first connector 40 and the electrode-assembly body 310 is prevented, and a short circuit caused by metal debris adhering to the first connector 40 and the electrode-assembly body 310 during component welding is prevented. In addition, the high temperature generated when an overcurrent occurs in the first connector 40 is avoided from affecting the chemical stability of the electrolyte near the electrode-assembly body 310 and the first connector 40, thereby preventing defects from occurring in the electrode-assembly body 310, and improving the yield of the energy storage device 1000. Meanwhile, the second connector 50 and the second tab 330 are connected by welding. The second side-heat-insulating-member 84, the second end-heat-insulating-member 85 and the second tail-heat-insulating-member 86 are positioned between both the second connector 50 and a part of the second lower plastic member 20 and the electrode-assembly body 310. Therefore, a short circuit caused by the contact between the second connector 50 and the electrode-assembly body 310 is prevented, and a short circuit caused by metal debris adhering to the second connector 50 and the electrode-assembly body 310 during component welding is prevented. In addition, the high temperature generated when an overcurrent occurs in the second connector 50 is avoided from affecting the chemical stability of the electrolyte near the electrode-assembly body 310 and the second connector 50.

Specifically, the first transition portion 42 is connected to the first tab 320. The first tab 320 extends from the first side-surface 311 of the electrode-assembly body 310 to one side of the first transition portion 42 positioned facing away from the electrode-assembly body 310, and is welded to the first outer-side-surface 421 of the first transition portion 42, to realize electrical conduction between the first tab 320 and the first connector 40. In addition, the first transition portion 42 is separated from the electrode-assembly body 310 by the first side-heat-insulating-member 81 and the first tail-heat-insulating-member 83. It can be understood that a large amount of heat is easily generated when the first tab 320 and the first transition portion 42 are welded, a large amount of heat is generated when the overcurrent occurs in the first tab 320 and the first connector 40, and the heat is blocked by the first side-heat-insulating-member 81 and the first tail-heat-insulating-member 83 and cannot be transferred to the electrode-assembly body 310 through the first connector 40. Therefore, defects such as thermal shrinkage, melting-through, and damage of the separator between the positive electrode sheet and the negative electrode sheet in the electrode-assembly body 310 are avoided, thereby protecting the separator, the positive electrode sheet and the negative electrode sheet of the electrode-assembly body 310, and improving the yield of the energy storage apparatus 1000.

The first bending portion 43 corresponds to a position of an edge (not shown) of the electrode-assembly body 310, and the edge is an intersection line between the top surface 313 and the first side-surface 311 of the electrode-assembly body 310. The first bending portion 43 is separated from the electrode-assembly body 310 by the overlapping part of the first side-heat-insulating-member 81 and the first end-heat-insulating-member 82. Since the first bending portion 43 is formed by bending, the current carrying capacity of the first bending portion 43 becomes poor after being bent and stretched, when the overcurrent occurs in the first connector 40, the amount of heat at the first bending portion 43 is also greater than the amount of heat at the first connecting portion 41 and the first transition portion 42. Meanwhile, in the process of infiltrating the first connector 40 with the electrolyte, the adhesiveness of the single heat insulating member 80 to the first bending portion 43 is insufficient, so that the heat insulating member 80 positioned at the first bending portion 43 is likely to lose viscosity when the heat insulating member 80 is impacted by the electrolyte. As a result, the electrolyte penetrates between the first connector 40, the first lower plastic member 10, and the heat insulating member 80, and the heat insulating member 80, and when the electrolyte accumulates excessively between the first connector 40, and the first lower plastic member 10, and the heat insulating member 80, the primary attachment of the heat insulating member 80 to the first connector 40 is not tight, and the secondary attachment of the heat insulating member 80 to the first connector 40 has insufficient adhesiveness. Therefore, the overlapping part of the first side-heat-insulating-member 81 and the first end-heat-insulating-member 82 is provided at the first bending portion 43, so that the mutual pulling between the first side-heat-insulating-member 81 and the first end-heat-insulating-member 82 is formed, and the adhesiveness of the heat insulating member 80 to the first bending portion 43 is increased. In addition, the overlapping part increases the thickness of the heat insulating member 80 covering the first bending portion 43, so that the heat conduction of the first bending portion 43 can be better blocked, which is more conducive to blocking the heat at the first bending portion 43 when the overcurrent occurs in the first connector 40. It may be noted that when the area of the overlapping part of the first side-heat-insulating-member 81 and the first end-heat-insulating-member 82 is larger, the mutual pulling force between the first side-heat-insulating-member 81 and the first end-heat-insulating-member 82 is greater, and the adhesiveness of the heat insulating member 80 to the first bending portion 43 is greater.

The first connecting portion 41 is separated from the electrode-assembly body 310 by the first end-heat-insulating-member 82. Since the heat generated by welding of the first transition portion 42 and the first tab 320 may be transferred to the first transition portion 41 through the first transition portion 42 and the first bending portion 43, the first end-heat-insulating-member 82 can block the heat transferred to the first transition portion 41 from being further transferred to the electrode-assembly body 310. Therefore, the separator and the electrode sheet of the electrode-assembly body 310 can be further protected, defects such as thermal shrinkage, melting-through, and damage of the separator between the positive electrode sheet and the negative electrode sheet in the electrode-assembly body 310 are avoided, and the yield of the energy storage apparatus 1000 is improved. Meanwhile, the first end-heat-insulating-member 82 covers the first terminal-post 60 passing through the first via hole 413, so as to block metal debris generated when the first terminal-post 60 and the first connecting portion 41 are welded from falling into the electrode assembly 300, thereby preventing the electrode assembly 300 from a short circuit caused by the contact between the metal debris and the electrode assembly 300.

In some embodiments, when the first lower plastic member 10 abuts against the electrode-assembly body 310, and the first end-heat-insulating-member 82 directly covers the first protrusion-face 161 and the first boss-face 131 of the first boss 13, the first end-heat-insulating-member 82 can separate the first lower plastic member 10 from the electrode-assembly body 310, so as to block the heat conduction from the first connector 40 and the part of the first lower plastic member 10 near the first connector 40 to the electrode-assembly body 300 to the greatest extent, and to avoid the influence of high temperature on the electrode assembly 300. Meanwhile, the smooth surface of the first end-heat-insulating-member 82 can also prevent the first lower plastic member 10 and the electrode-assembly body 310 from scratching in the contact process, and improve the yield of the energy storage apparatus 1000.

The second transition portion 52 is connected to the second tab 330. The second tab 330 extends from the second side-surface 312 of the electrode-assembly body 310 to one side of the second transition portion 52 positioned facing away from the electrode-assembly body 310, and is welded to the second outer-side-surface 521 of the second transition portion 52, to realize electrical conduction between the second tab 330 and the second connector 50. In addition, the second transition portion 52 is separated from the electrode-assembly body 310 by the second side-heat-insulating-member 84 and the second tail-heat-insulating-member 86. It can be understood that a large amount of heat is easily generated when the second tab 330 and the second transition portion 52 are welded, a large amount of heat is generated when the overcurrent occurs in the second tab 330 and the second connector 50, and the heat is blocked by the second side-heat-insulating-member 84 and the second tail-heat-insulating-member 86 and cannot be transferred to the electrode-assembly body 310 through the second connector 50. Therefore, defects such as thermal shrinkage, melting-through, and damage of the separator between the positive electrode sheet and the negative electrode sheet in the electrode-assembly body 310 are avoided, thereby protecting the separator, the positive electrode sheet, and the negative electrode sheet of the electrode-assembly body 310, and improving the yield of the energy storage apparatus 1000.

The second bending portion 53 corresponds to a position of an edge (not shown) of the electrode-assembly body 310, and the edge is an intersection line of the top surface 313 and the second side-surface 312 of the electrode-assembly body 310. The second bending portion 53 is separated from the electrode-assembly body 310 by the overlapping part of the second side-heat-insulating-member 84 and the second end-heat-insulating-member 85. Since the second bending portion 53 is formed by bending, the current carrying capacity of the second bending portion 53 becomes poor after being bent and stretched, when the overcurrent occurs in the second connector 50, the amount of heat at the second bending portion 53 is also greater than the amount of heat at the second connecting portion 51 and the second transition portion 52. Meanwhile, in the process of infiltrating the second connector 50 with the electrolyte, the adhesiveness of the single heat insulating member 80 to the second bending portion 53 is insufficient, so that the heat insulating member 80 positioned at the second bending portion 53 is likely to lose viscosity when the heat insulating member 80 is impacted by the electrolyte. As a result, the electrolyte penetrates between the second connector 50, the second lower plastic member 20, and the heat insulating member 80, and when the electrolyte accumulates excessively between the second connector 50, and the second lower plastic member 20, and the heat insulating member 80, the primary attachment of the heat insulating member 80 to the second connector 50 is not tight, and the secondary attachment of the heat insulating member 80 to the second connector 50 has insufficient adhesiveness. Therefore, the overlapping part of the second side-heat-insulating-member 84 and the second end-heat-insulating-member 85 is provided at the second bending portion 53, so that the mutual pulling force between the second side-heat-insulating-member 84 and the second end-heat-insulating-member 85 is formed, and the adhesiveness of the heat insulating member 80 to the second bending portion 53 is increased. In addition, the overlapping part increases the thickness of the heat insulating member 80 covering the second bending portion 53, so that the heat conduction of the second bending portion 53 can be better blocked, which is more conducive to blocking the heat at the second bending portion 53 when the overcurrent occurs in the second connector 50. It may be noted that when the area of the overlapping part of the second side-heat-insulating-member 84 and the second end-heat-insulating-member 85 is larger, the mutual pulling force between the second side-heat-insulating-member 84 and the second end-heat-insulating-member 85 is greater, and the adhesiveness of the heat insulating member 80 to the second bending portion 53 is greater.

The second connecting portion 51 is separated from the electrode-assembly body 310 by the second end-heat-insulating-member 85. Since the heat generated by welding of the second transition portion 52 and the second tab 330 may be transferred to the second connecting portion 51 through the second transition portion 52 and the second bending portion 53, the second end-heat-insulating-member 85 can block the heat transferred to the second connecting portion 51 from being further transferred to the electrode-assembly body 310. Therefore, the separator and the electrode sheet of the electrode-assembly body 310 can be further protected, defects such as thermal shrinkage, melting-through, and damage of the separator between the positive electrode sheet and the negative electrode sheet in the electrode-assembly body 310 are avoided, and the yield of the energy storage apparatus 1000 is improved. Meanwhile, the second end-heat-insulating-member 85 covers the second terminal-post 70 passing through the second via hole 513, so as to block metal debris generated when the second terminal-post 70 and the second connecting portion 51 are welded from falling into the electrode assembly 300, thereby preventing the electrode assembly 300 from a short circuit caused by the contact between the metal debris and the electrode assembly 300.

In some embodiments, when the second lower plastic member 20 abuts against the electrode-assembly body 310 and the second end-heat-insulating-member 85 directly covers the second protrusion-face 261 and the second boss-face 231 of the second boss 23, the second end-heat-insulating-member 85 can separate the second lower plastic member 20 from the electrode-assembly body 310, so as to block the heat conduction from the second connector 50 and the part of the second lower plastic member 20 near the second connector 50 to the electrode-assembly body 300 to the greatest extent, and to avoid the influence of high temperature on the electrode assembly 300. Meanwhile, the smooth surface of the second end-heat-insulating-member 85 can also prevent the second lower plastic member 20 and the electrode-assembly body 310 from scratching in the contact process, and improve the yield of the energy storage apparatus 1000.

It may be noted that the length (i.e., the dimension in the Z-axis direction) of the first transition portion 42 is smaller than the length (i.e., the dimension in the Z-axis direction) of the first tab 320. The length (i.e., the dimension in the Z-axis direction) of the second transition portion 52 is smaller than the length (i.e., the dimension in the Z-axis direction) of the second tab 330.

The end cover assembly 100 and the electrode assembly 300 are both mounted in the housing 200, and an edge of the end cover 30 and an edge of the opening 201 of the housing 200 are connected by welding or the like to seal the energy storage apparatus 1000.

In the related art, when the electrode-assembly body 310 adopts the stacking type, tabs are led out from the electrode-assembly body 310 and bent, and then welded with connectors. However, during the welding of the tabs and the connectors, high temperatures are likely to be generated and are transferred to the electrode-assembly body 310 through the connectors, resulting in a series of defects in the electrode-assembly body 310, such as thermal shrinkage, melting-through, damage of the separator between the positive electrode sheet and the negative electrode sheet, and reducing the yield of the energy storage apparatus.

In the embodiments of the present disclosure, the first side-heat-insulating-member 81, the first end-heat-insulating-member 82, and the first tail-heat-insulating-member 83 are provided at the first connector 40 and the part of the first lower plastic member 10 near the first connector 40, so as to reduce, in a physical blocking manner, the influence of a large amount of heat, generated when the first connector 40 is welded with both the first tab 320 and the first terminal-post 60, on the electrode-assembly body 310, that is, to avoid defects such as thermal shrinkage, melting-through, and damage of the separator between the positive electrode sheet and the negative electrode sheet. In addition, the first side-heat-insulating-member 81, the first end-heat-insulating-member 82, and the first tail-heat-insulating-member 83 also avoid a short circuit caused by the contact between the first connector 40 and the electrode-assembly body 310, and avoid a short circuit caused by metal debris generated when the first connector 40 is welded with both the first terminal-post 60 and the first tab 320 falling into the first connector 40 and the electrode-assembly body 310.

Meanwhile, the second side-heat-insulating-member 84, the second end-heat-insulating-member 85, and the second tail-heat-insulating-member 86 are also provided at the second connector 50 and the part of the second lower plastic member 20 near the second connector 50, so as to reduce the influence of a large amount of heat, generated when the second connector 50 is welded with both the second tab 330 and the second terminal-post 70, on the electrode-assembly body 310. In addition, the second side-heat-insulating-member 84, the second end-heat-insulating-member 85, and the second tail-heat-insulating-member 86 also avoid a short circuit caused by the contact between the second connector 50 and the electrode-assembly body 310, and avoid a short circuit caused by metal debris generated when the second connector 50 is welded with both the second terminal-post 70 and the second tab 330 falling into the second connector 50 and the electrode-assembly body 310. Therefore, the yield of the energy storage apparatus 1000 is improved.

Since the heat conduction between metal and metal is good, and the heat conduction between metal and plastic is relatively poor, the thickening region is provided between the first connector 40 and the electrode-assembly body 310, and the thickening region is provided between the second connector 50 and the electrode-assembly body 310. The thickening area can better block the heat conduction from the first connector 40 and the second connector 50 to the electrode-assembly body 310, and is more conducive to blocking the heat of the first connector 40 and the second connector 50 when the overcurrent occurs in the first connector 40 and the second connector 50. Therefore, the probability of abnormalities of the electrode assembly 300 (such as increased internal resistance, self-discharge, or ignition) is reduced to a certain extent, and the consistency of the temperature of the first connector 40 and the temperature of the second connector 50 is ensured, thereby facilitating improving the overall service life of the energy storage apparatus 1000. The heat insulating member 80 can also block the heat conduction, reduce the risk of metallic lithium precipitation from the negative electrode, and ensure the safety of the energy storage apparatus 1000. Meanwhile, as the area of the thickened region is increased, the mutual pulling force between the two adjacent heat insulating members 80 is increased, and the adhesiveness of the heat insulating members 80 to the first connector 40 and the second connector 50 is increased, which is conductive to improving the yield of the energy storage apparatus 1000.

The above descriptions are merely some embodiments and implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An end cover assembly (100) comprising:
a lower plastic member (10, 20), wherein the lower plastic member (10, 20) comprises a body (11, 21), the body (11, 21) has a top face (111, 211) and a bottom face (112, 212), the top face (111, 211) and the bottom face (112, 212) are positioned facing away from each other in a thickness direction of the body (11, 21), the bottom face (112, 212) of the body (11, 21) serves as a bottom face of the lower plastic member (10, 20), the lower plastic member (10, 20) further defines an assembling groove (15, 25), the assembling groove (15, 25) has a groove bottom face (151, 251), and the groove bottom face (151, 251) and the bottom face (112, 212) have identical orientations;
a connector (40, 50), wherein the connector (40, 50) comprises a connecting portion (41, 51), a transition portion (42, 52), and a bending portion (43, 53) connected between the connecting portion (41, 51) and the transition portion (42, 52), an extending direction of the connecting portion (41, 51) and an extending direction of the transition portion (42, 52) define an angle therebetween, the connecting portion (41, 51) is accommodated in the assembling groove (15, 25), and the transition portion (42, 52) extends in a direction away from the lower plastic member (10, 20); wherein
the connecting portion (41, 51) has an outer surface (411, 511) and an inner surface (412, 512), the inner surface (412, 512) and the outer surface (411, 511) are positioned facing away from each other in a thickness direction of the connecting portion (41, 51), the outer surface (411, 511) is connected to the groove bottom face (151, 251), the inner surface (412, 512) is positioned facing away from the groove bottom face (151, 251), the transition portion (42, 52) has an inner side surface (422, 522), and the bending portion (43, 53) has an inner curved surface (432, 532), and the inner curved surface (432, 532) is connected between the inner surface (412, 512) and the inner side surface (422, 522); and
a heat insulating member (80), wherein the heat insulating member (80) is stacked on the connector (40, 50) and completely covers the inner surface (412, 512) and the inner side surface (422, 522), the heat insulating member (80) comprises a thickened region, and the thickened region completely covers the inner curved surface (432, 532).

2. The end cover assembly (100) of claim 1, wherein the thickened region further covers a part of the inner side surface (422, 522) connected to one of two sides of the inner curved surface (432, 532), a part of the inner surface (412, 512) connected to the other of the two sides of the inner curved surface (432, 532), or the part of the inner side surface (422, 522) connected to one of two sides of the inner curved surface (432, 532) and the part of the inner surface (412, 512) connected to the other of the two sides of the inner curved surface (432, 532).

3. The end cover assembly (100) of claim 1, wherein a ratio of an area of the thickened region to an area of the inner curved surface (432, 532) is greater than or equal to 1.2 and less than or equal to 5.

4. The end cover assembly (100) of claim 1, wherein the heat insulating member (80) comprises an end heat-insulating-member (82, 85) and a side heat-insulating-member (81, 84), the end heat-insulating-member (82, 85) covers the inner side surface (422, 522) and the inner curved surface (432, 532), the side heat-insulating-member (81, 84) covers the inner curved surface (432, 532) and the inner surface (412, 512); and
the end heat-insulating-member (82, 85) and the side heat-insulating-member (81, 84) partially overlap, and an overlapping part of the end heat-insulating-member (82, 85) and the side heat-insulating-member (81, 84) is the thickened region.

5. The end cover assembly (100) of claim 4, wherein the body (11, 21) is provided with a boss (13, 23) protruding from the bottom face (112, 212), the boss (13, 23) has a boss face (131, 231) positioned facing away from the bottom face (112, 212); and the assembling groove (15, 25) is recessed from the boss face (131, 231) and is positioned at an end of the lower plastic member (10, 20) in a length direction of the lower plastic member (10, 20); and
the end heat-insulating-member (82, 85) completely covers the boss face (131, 231), or the end heat-insulating-member (82, 85) completely covers the boss face (131, 231) and a part of the bottom face (112, 212) of the lower plastic member (10, 20) positioned at one side of the boss (13, 23) positioned facing away from the assembling groove (15, 25).

6. The end cover assembly (100) of claim 4, wherein the body (11, 21) is provided with a boss (13, 23) protruding from the bottom face (112, 212), the boss (13, 23) has a boss face (131, 231) positioned facing away from the bottom face (112, 212); and the assembling groove (15, 25) is recessed from the boss face (131, 231) and is positioned at an end of the lower plastic member (10, 20) in a length direction of the lower plastic member (10, 20); and
in a width direction of the lower plastic member (10, 20), a width of the end heat-insulating-member (82, 85) is larger than a width of the connector (40, 50), a width of a part of the end heat-insulating-member (82, 85) exceeding the connector (40, 50) is an excess width, and a ratio of a width of the thickened region of an extending direction of the connector (40, 50) to the excess width is greater than or equal to 1.1 and less than or equal to 3.

7. The end cover assembly (100) of claim 4, wherein the side heat-insulating-member (81, 84) further covers a part of the inner surface (412, 512), the end heat-insulating-member (82, 85) further covers a part of the inner side surface (422, 522), and the overlapping part of the end heat-insulating-member (82, 85) and the side heat-insulating-member (81, 84) further covers the part of the inner side surface (422, 522) and the part of the inner surface (412, 512).

8. The end cover assembly (100) of claim 4, wherein the end heat-insulating-member (82, 85) and the side heat-insulating-member (81, 84) are integrally formed, or the end heat-insulating-member (82, 85) and the side heat-insulating-member (81, 84) are separately formed.

9. The end cover assembly (100) of claim 5, wherein the body (11, 21) is further provided with a protrusion (16, 26) protruding from the bottom face (112, 212), the protrusion (16, 26) is adjacent to the boss (13, 23) in the length direction of the lower plastic member (10, 20), the protrusion (16, 26) exceeds the boss (13, 23) relative to the bottom face (112, 212), the protrusion (16, 26) has a protrusion inner side surface (162, 262), the protrusion inner side surface (162, 262) is positioned facing towards the boss (13, 23) and is connected to the boss face (131, 231), and the end heat-insulating-member (82, 85) abuts against the protrusion inner side surface (162, 262) at an edge of the end heat-insulating-member (82, 85).

10. The end cover assembly (100) of claim 6, wherein the body (11, 21) is further provided with a protrusion (16, 26) protruding from the bottom face (112, 212), the protrusion (16, 26) is adjacent to the boss (13, 23) in the length direction of the lower plastic member (10, 20), the protrusion (16, 26) has a protrusion face (161, 261), and the protrusion face (161, 261) is positioned facing away from the bottom face (112, 212); and
the end heat-insulating-member (82, 85) covers the boss face (131, 231) and the protrusion face (161, 261) or the end heat-insulating-member (82, 85) covers a protrusion outer side surface (163, 263) of the protrusion (16, 26) positioned facing away from the boss (13, 23); and/or the end heat-insulating-member (82, 85) covers a part of the bottom face (112, 212) of the lower plastic member (10, 20) positioned at one side of the protrusion (16, 26) positioned facing away from the boss (13, 23).

11. The end cover assembly (100) of any one of claims 1 to 7, wherein the connector (40, 50) comprises a first connector (40) and a second connector (50), the first connector (40) and the second connector (50) are respectively positioned at opposite ends of the lower plastic member (10, 20) in a length direction of the lower plastic member (10, 20), the first connector (40) is a positive connector, and the second connector (50) is a negative connector; and
the end heat-insulating-member (82, 85) comprises a first end-heat-insulating-member (82) and a second end-heat-insulating-member (85), the side heat-insulating-member (81, 84) comprises a first side-heat-insulating-member (81) and a second side-heat-insulating-member (84), the first end-heat-insulating-member (82) and the first side-heat-insulating-member (81) cover the first connector (40), and the second end-heat-insulating-member (85) and the second side-heat-insulating-member (84) cover the second connector (50).

12. The end cover assembly (100) of claim 1, wherein the end cover assembly (100) further comprises a terminal post (60, 70) and an end cover (30), the end cover (30) and the lower plastic member (10, 20) are stacked in a thickness direction of the end cover assembly (100), the end cover (30) defines a terminal-post through-hole (33, 34) extending through both surfaces of the end cover (30) in a thickness direction of the end cover (30), the connecting portion (41, 51) defines a via hole (413, 513) extending through the inner surface (412, 512) and the outer surface (411, 511), the lower plastic member (10, 20) further defines a through hole (17, 27) extending through the groove bottom face (151, 251) and the top face (111, 211), the terminal-post through-hole (33, 34), the through hole (17, 27), and the via hole (413, 513) are coaxially defined, and the terminal post (60, 70) passes through the terminal-post through-hole (33, 34), the through hole (17, 27), and the via hole (413, 513), and is electrically connected to the connecting portion (41, 51); and
the heat insulating member (80) covers the terminal post (60, 70).

13. An energy storage apparatus (1000), comprising a housing (200), an electrode assembly (300), and the end cover assembly (100) of any one of claims 1 to 12, wherein the housing (200) defines an opening (201), the electrode assembly (300) is mounted in the housing (200), the electrode assembly (300) comprises an electrode-assembly body (310) and a tab (320, 330), the electrode-assembly body (310) has a side surface (311, 312) and a top surface (313) connected to the side surface (311, 312), the tab (320, 330) is led out from the side surface (311, 312) and is electrically connected to the electrode-assembly body (310), the end cover assembly (100) seals the opening (201), the bottom face (112, 212) is positioned facing towards the top surface (313), the transition portion (42, 52) is stacked with and electrically connected to the tab (320, 330), and the heat insulating member (80) is positioned facing towards the electrode-assembly body (310) at one side of the heat insulating member (80) positioned facing away from the connector (40, 50).

14. An electricity-consumption device, comprising the energy storage apparatus (1000) of claim 13, wherein the energy storage apparatus (1000) is configured to power the electricity-consumption device.
